# EUROPEAN PATENT SPECIFICATION

(11) **EP 4 466 884 B1**
(45) Date of publication and mention of the grant of the patent: **30.09.2026**
(21) Application number: 23788600.7
(22) Date of filing: 12.04.2023
(51) Int. Cl.: H04W 28/06, H04L 69/324, H04W 80/02, H04L 69/28

(54) **METHOD AND APPARATUS FOR PDCP RE-ESTABLISHMENT PROCEDURE OF UE SUPPORTING ETHERNET HEADER COMPRESSION PROTOCOL IN WIRELESS COMMUNICATION SYSTEM**
VERFAHREN UND VORRICHTUNG FÜR PDCP-WIEDERHERSTELLUNGSVERFAHREN EINES BENUTZERGERÄTS MIT UNTERSTÜTZUNG EINES ETHERNET-HEADER-KOMPRIMIERUNGSPROTOKOLLS IN EINEM DRAHTLOSKOMMUNIKATIONSSYSTEM
PROCÉDÉ ET APPAREIL POUR PROCÉDURE DE RÉTABLISSEMENT DE PDCP D'UN UE PRENANT EN CHARGE UN PROTOCOLE DE COMPRESSION D'EN-TÊTE ETHERNET DANS UN SYSTÈME DE COMMUNICATION SANS FIL

(30) Priority: 12.04.2022 KR 20220045412
(43) Date of publication of application: 27.11.2024
(73) Proprietor: Samsung Electronics Co., Ltd., Suwon-si, Gyeonggi-do 16677 (KR)
(72) Inventor: KIM, Donggun, Suwon-si, Gyeonggi-do 16677 (KR)
(74) Representative: HGF
(86) International application number: PCT/KR2023/004958
(87) International publication number: WO 2023/200251

(56) References cited:
- KR-A- 20210 076 826
- US-A1- 2018 227 819
- US-A1- 2020 196 189
- US-A1- 2020 221 526
- US-A1- 2021 136 635
- US-A1- 2022 014 967
- US-B2- 10 917 815
- "3 Generation Partnership Project; Technical Specification Group Radio Access Network; Evolved Universal Terrestrial Radio Access (E-UTRA); Packet Data Convergence Protocol (PDCP) specification (Release 16)", 3GPP STANDARD; TECHNICAL SPECIFICATION; 3GPP TS 36.323, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V16.5.0, 23 December 2021 (2021-12-23), Mobile Competence Centre ; 650, route des Lucioles ; F-06921 Sophia-Antipolis Cedex ; France, pages 1 - 57, XP052083394

## Description

### Technical Field

The disclosure relates to a communication method of a wireless communication system. More particularly, the disclosure relates to a method and an apparatus for a user equipment (UE) supporting an Ethernet header compression protocol.

### Background Art

Fifth generation (5G) mobile communication technologies define broad frequency bands such that high transmission rates and new services are possible, and can be implemented not only in "Sub 6 gigahertz (GHz)" bands, such as 3.5GHz, but also in "Above 6GHz" bands referred to as millimeter wave (mmWave) including 28GHz and 39GHz. In addition, it has been considered to implement sixth generation (6G) mobile communication technologies (referred to as beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive multiple input, multiple output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods, such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies, such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, new radio (NR) UE Power Saving, non-terrestrial network (NTN) which is UE-satellite direct communication for providing coverage in an area in which communication with terrestrial networks is unavailable, and positioning.

Moreover, there has been ongoing standardization in air interface architecture/ protocol regarding technologies, such as industrial Internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step random-access channel (RACH) for NR). There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies, such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and artificial intelligence (AI) from the design stage and internalizing end-to-end AI support functions, and next-generation distributed computing technology for implementing services at levels of complexity exceeding the limit of UE operation capability by utilizing ultra-high-performance communication and computing resources.

The above information is presented as background information only to assist with an understanding of the disclosure. No determination has been made, and no assertion is made, as to whether any of the above might be applicable as prior art with regard to the disclosure.
US 2021136635 discloses, according to its abstract, a method, performed by a terminal, in a wireless communication system is provided. The method includes receiving, from a source base station, a radio resource control (RRC) reconfiguration message including data radio bearer (DRB) configuration information, wherein the DRB configuration information includes an identifier of a DRB and an indicator for a dual active protocol stack (DAPS) handover, and in case that the DRB configuration information includes service data adaptation protocol (SDAP) configuration information, and completion of a random access to a target base station is indicated by a target medium access control (MAC) entity for the target base station, reconfiguring a SDAP entity based on the SDAP configuration information.
KR 20210076826 discloses, according to its abstract, a communication technique that converges a 5G communication system with an IoT technology to support higher data rates after a 4G system and a system thereof. This can be applied to intelligent services (eg, smart home, smart building, smart city, smart car or connected car, healthcare, digital education, retail business, security and safety related services, etc.) based on a 5G communication technology and an IoT-related technology. Disclosed are a method for setting a non-order transfer function of a protocol layer device and a device thereof.

### Disclosure of Invention

### Solution to Problem

Aspects of the invention are set out in the appended claims.

The disclosure addresses at least the above-mentioned problems and/or disadvantages and provides at least the advantages described below. Accordingly, the disclosure is to provide an apparatus and a method for effectively providing a service in a mobile communication system.

Additional disclosures will be set forth in part in the description which follows and, in part, will be apparent from the description, or may be learned by practice of the presented examples.

In accordance with a disclosure, a method performed by a UE in a wireless communication system is provided. The method includes receiving a radio resource control (RRC) message from a base station (BS), the RRC message including radio link control (RLC) device (entity) configuration information, packet data convergence protocol (PDCP) device configuration information, and bearer configuration information, identifying whether a PDCP device is connected to an RLC device in which an out-of-sequence delivery function (rlc-OutOfOrderDelivery) is configured, based on the RRC message, and configuring a reordering function in the PDCP device, based on whether the PDCP device is connected to the RLC device, wherein the RLC device may be at least one device of an RLC acknowledged mode (AM) RLC device or an RLC unacknowledged mode (UM) mode RLC device.

Disclosed examples provide an apparatus and a method capable of effectively providing a service in a mobile communication system.

Other advantages, and salient features of the disclosure will become apparent to those skilled in the art from the following detailed description, which, taken in conjunction with the annexed drawings, discloses various examples of the disclosure.

### Brief Description of Drawings

The above and other aspects, features, and advantages of certain embodiments of the disclosure will be more apparent from the following description taken in conjunction with the accompanying drawings, in which:
FIG. 1 illustrates a structure of a long-term evolution (LTE) system according to an embodiment of the disclosure;
FIG. 2 illustrates a wireless protocol structure in an LTE system according to an embodiment of the disclosure;
FIG. 3 illustrates a structure of a next-generation mobile communication system according to an embodiment of the disclosure;
FIG. 4 illustrates a wireless protocol structure of a next-generation mobile communication system according to an embodiment of the disclosure;
FIG. 5 illustrates a procedure in which a UE switches from an RRC idle mode to an RRC-connected mode and configures a connection to a network according to an embodiment of the disclosure;
FIG. 6 illustrates an efficient data processing method of PDCP layer devices according to an embodiment of the disclosure;
FIG. 7 illustrates a problem generated when an RLC layer device is connected to and configured in PDCP layer device structure 1-1 or PDCP layer device structure 1-2 and processes received data according to an embodiment of the disclosure;
FIG. 8 illustrates an operation of a UE according to an embodiment of the disclosure;
FIG. 9 illustrates an operation of a BS according to an embodiment of the disclosure;
FIG. 10 illustrates a structure of a UE according to an embodiment of the disclosure;
FIG. 11 is a block diagram illustrating a target rating point (TRP) in a wireless communication system according to an embodiment of the disclosure;
FIG. 12 illustrates an Ethernet header compression (EthHC) method according to an embodiment of the disclosure; and
FIG. 13 is a flowchart illustrating an operation according to an embodiment of the disclosure.

Throughout the drawings, it should be noted that like reference numbers are used to depict the same or similar elements, features, and structures.

### Best Mode for Carrying out the Invention

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

In the following description, terms for identifying access nodes, terms referring to network entities, terms referring to messages, terms referring to interfaces between network entities, terms referring to various identification information, and the like are illustratively used for the convenience of description. Therefore, the disclosure is not limited by the terms as used below, and other terms referring to subjects having equivalent technical meanings may be used.

As an example, an RLC entity may be replaced by any other entity performing the same function. As another example, a PDCP entity may be replaced by any other entity performing the same function. As still another example, a bearer may be replaced by any other entity performing the same function. For example, the disclosure is not limited by the terms "RLC entity" and "PDCP entity", and other terms referring to subjects having equivalent technical meanings may be used.

In the following description, the disclosure will be described using terms and names defined in the 3rd generation partnership project long term evolution (3GPP LTE) standards for the convenience of description. However, the disclosure is not limited by the terms and names defined in the 3GPP LTE standards, and may be applied in the same way to systems that conform other standards. For example, the disclosure may also be applied to 5G or 6G communication system for supporting a higher data transfer rate in the same way. In addition, In the disclosure, the term "eNB" may be interchangeably used with the term "gNB". For example, a base station described as "eNB" may indicate "gNB".

The disclosure describes a method of configuring an out-of-sequence delivery function (rlc-OutOfOrderDelivery) in a protocol layer device (for example, a radio link control (RLC) layer device) and operating the same as a method of reducing a transmission delay in a wireless communication system.

A detailed configuration method or operation methods described in the disclosure may be applied to a evolved universal mobile telecommunications system (UMTS) terrestrial radio access (UTRA) radio resource control (RRC) layer device (or an LTE RRC layer device), an E-UTRA RLC layer device (or an LTE RLC layer device), or an evolved-UTRA (E-UTRA) packet data convergence protocol (PDCP) layer device (or an LTE PDCP layer device). Further, the detailed configuration method or operation methods described in the disclosure may be expanded and applied to an NR RRC layer device, an NR RLC layer device, or an NR PDCP layer device.

The out-of-sequence delivery function (rlc-OutOfOrderDelivery) may be configured in a protocol layer device (for example, an RLC layer device) through the following configuring method. In the disclosure, a protocol layer device to which a method of configuring or operating the out-of-sequence delivery function (rlc-OutOfOrderDelivery) is applied is considered and described as an RLC layer device, which may be easily expanded to a PDCP layer device or another higher-layer device. Further, the disclosure describes a configuration method capable of significantly reducing transmission delay while saving transmission resources by configuring an Ethernet header compression function (Ethernet header compression) in PDCP layer device configuration information for any bearer (or the same bearer) and configuring an out-of-sequence delivery function in RLC layer device configuration information for any bearer (or the same bearer), a method of operating a PDCP layer device, or a method of operating an RLC layer device.

First configuration method: the BS may transmit an RRC message (for example, an RRCReconfiguration message (RRC Connection Reconfiguration), an RRCSetup message (RRC Connection Setup), or an RRCResume message (RRC Connection Resume)) to the UE. The BS may configure an indicator (for example, rlc-OutOfOrderDelivery) of configuring an out-of-sequence delivery function in RLC layer device configuration information (for example, rlf-config) of transmission resource configuration information (for example, Radio Resource Config Dedicated) included in the RRC message and configure the out-of-sequence delivery function in an RLC layer device for each bearer of the UE (for example, the indicator is configured and a value thereof is configured as TRUE) or may not configure the same (for example, there is no indicator or the indicator is configured and the value thereof is configured as FALSE). The indicator (for example, rlc-OutOfOrderDelivery)) of configuring the out-of-sequence delivery function in the RLC layer device configuration information (for example, rlf-config) of the transmission resource configuration information (for example, Radio Resource Config Dedicated) may indicate transmission of data to a higher-layer device (for example, a PDCP layer device) regardless of the sequence or through an out-of-sequence transfer method when the data received by the RLC layer device corresponding to RLC layer device configuration information in which the indicator (for example, rlc-OutOfOrderDelivery) of configuring the out-of-sequence delivery function is configured is transmitted. The out-of-sequence delivery function in the RLC layer device configuration information (for example, rlf-config) of the transmission resource configuration information (for example, Radio Resource Config Dedicated) may be configured to an acknowledged mode (AM) (AM RLC entity) or unacknowledged mode (UM) (UM RLC entity). When the indicator of configuring the out-of-sequence delivery function is configured in the RLC layer device configuration information for the RLC layer device corresponding to the RLC layer device configuration information in which the indicator (for example, rlc-OutOfOrderDelivery) of configuring the out-of-sequence delivery function is configured and the value thereof is configured as TRUE, the RLC layer device performs the out-of-sequence transfer function (that is, if complete data (complete RLC service data units (SDU)) (or data which is not segmented data is received) regardless of RLC serial numbers received by the PDCP layer device or regardless of the sequence of RLC serial numbers). When performing the out-of-sequence delivery function, the RLC layer device may directly transfer data (RLC SDU) to a higher-layer device (for example, the RLC layer device may remove an RLC header and transfer the data to the higher-layer device without storing the data (RLC SDU). On the other hand, when the BS receives segmented data, the BS may start a reassembly timer (t-Reassembly) of the RLC layer device, store the data in a buffer for reassembly to configure complete data, and wait for receiving the remaining segmented data). The PDCP layer device connected to the RLC layer device in which the out-of-sequence delivery function is configured may configure or perform a reordering function. The reordering function of the PDCP layer device reorders the data received from a lower-layer device (for example, the RLC layer device) according to the order of PDCP serial numbers and transfers the data to the higher-layer device in ascending order with a gap of the PDCP serial numbers (or COUNT value) or without any difference. If an Ethernet header compression function is configured for the PDCP layer device, when the data is arranged in the order of PDCP serial numbers and transferred to the higher-layer device, an Ethernet header decompression procedure may be performed for the data (for example, PDCP SDU or PDCP PDU) and the Ethernet decompressed data (uncompressed PDCP SDU or PDCP SDU) may be transferred to the higher-layer device. When the PDCP serial number (or COUNT value) gap or difference is generated, the RLC layer device may start a reordering timer and wait for data having a PDCP serial number (or COUNT value) value corresponding to the PDCP serial number (or COUNT value) gap or difference until the reordering timer expires. If the data having the PDCP serial number (or COUNT value) value corresponding to the PDCP serial number (or COUNT value) gap or difference is received by the RLC layer device before the recording timer expires, the RLC layer device may stop the reordering timer or transfer data in order to a higher-layer device. If the Ethernet header compression function is configured for the PDCP layer device, when arranging data in the order of PDCP serial numbers and transferring the data to the higher-layer device in ascending order, the PDCP layer device may perform an Ethernet header decompression procedure for the data (for example, PDCP SDU or PDCP PDU) and transfer the Ethernet header decompressed data (uncompressed PDCP SDU or PDCP SDU) to the higher-layer device. If the data (for example, PDCP SDU or PDCP PDU) is not received until the timer expires, the stored data is transferred to the higher-layer device in ascending order of PDCP serial numbers (or COUNT values) up to a predetermined PDCP serial number (or COUNT value) when the reordering timer expires. If the Ethernet header compression function is configured for the PDCP layer device, when the data is transferred to the higher-layer device, an Ethernet header decompression procedure may be performed for the data (for example, PDCP SDU or PDCP PDU) and the Ethernet header decompressed data (uncompressed PDCP SDU or PDCP SDU) may be transferred to the higher-layer device. If an indicator indicating the PDCP reestablishment procedure for the PDPC layer device is configured or the PDCP layer device performs the PDCP reestablishment procedure when the UE receives the RRC message and if the bearer is connected (or mapped) to the RLC UM mode and uses a reordering function, the UE may perform the Ethernet header decompression procedure for stored data (if there is the stored data) and then transfer the data in ascending order of COUNT values connected to the data when the Ethernet header compression (EHC) function is configured (or the header compression function using the EHC (or the header decompression function) is configured). If the PDCP layer device is connected to at least one RLC layer device in which the out-of-sequence delivery function is configured, an indicator (drb-ContinueEHC-DL) indicating the continuous use of the Ethernet header compression function for the downlink is not configured, and the Ethernet header compression function is configured, the UE may reset an Ethernet header compression protocol (EHC protocol) for the downlink. In another method, the Ethernet header compression protocol (EHC protocol) may be reset for the downlink. Specifically, the case in which, when the UE receives the RRC message, an indicator indicating a PDCP reestablishment procedure for the PDCP layer device is configured or the PDCP layer device performs the PDCP reestablishment procedure may be described as an example. For example, when the bearer is connected to (or mapped to) an RLC UM mode and uses a reordering function to perform the reestablishment procedure, the UE may be connected to the PDCP layer device and at least one RLC layer device in which the out-of-sequence delivery function is configured. When the UE is connected to at least one RLC layer device, the UE may perform an Ethernet header decompression procedure for stored data (if there are stored data) or when an Ethernet header compression function (Ethernet header compression (EHC)) is configured (or when a header compression function using the EHC (or a header decompression function) is configured). After performing the Ethernet header decompression procedure, the UE may transfer the COUNT value connected to each piece of data to higher-layer devices in ascending order. Alternatively, after performing the Ethernet header decompression procedure, the UE may reset the Ethernet header compression protocol (EHC protocol) if an indicator (drb-ContinueEHC-DL) indicating the continuous use of the Ethernet header compression function for the downlink is not configured and the Ethernet header compression function is configured. Otherwise (or when the UE is not connected to the PDCP layer device and at least one RLC layer device in which the out-of-sequence delivery function is configured), the UE may transfer the COUNT value connected to each piece of data to higher-layer devices in ascending order with respect to the stored data (if there are stored data) (when the UE is not connected to the PDCP layer device and at least one RLC layer device in which the out-of-sequence function is configured, the Ethernet header compression function cannot be configured, and thus it is not needed to perform the Ethernet header decompression procedure for the stored data. For example, the case in which the PDCP layer device connected to the RLC UM mode uses the reordering function corresponds to the case in which the out-of-sequence delivery function is configured in a split bearer (split data radio bearer (DRB) or a bearer in which a packet duplication function is configured), an LTE-wide local area network (WLAN) aggregation (LWA) bearer (LWA DRB), or the RLC layer device, and the Ethernet header compression function has high implementation complexity and thus cannot be configured in the split bearer or the LWA bearer. Accordingly, when the PDCP layer device connected to the RLC UM mode uses the reordering function, the Ethernet header compression function may be configured only when the out-of-sequence delivery function is configured in the RLC layer device, and when transmitting the stored data to a higher-layer device, the PDCP layer device needs to perform the Ethernet header decompression procedure and transmits the data.

When the out-of-sequence delivery function described in the disclosure is configured in the RLC layer device or when the RLC layer device is configured to set and perform the out-of-sequence delivery function (when an out-of-sequence delivery function configuration indicator is configured as a TRUE value), the PDCP layer device performing the reordering function may be configured or operated as follows in order to prevent data loss or in order to prevent transmission of data, which the PDPC layer device receives from lower-layer devices, to a higher-layer device (for example, the service data adaptation protocol (SDAP) layer device or the application layer device) regardless of the order.

In the method of operating the PDCP layer device described in the disclosure, the PDCP layer device which is PDCP layer device 1-3 (an LTE PDCP layer device or an E-UTRA PDCP layer device) or PDCP layer device 2 (an NR PDCP layer device) having the reordering function described in the disclosure may process received data for the following cases. Specifically, for data radio bearers (DRBs) connected to the RLC AM mode or the RLC UM mode, for LWA bearers, or when the packet duplication technology is used, the PDCP layer device may use or apply a reordering function to the following cases and perform a procedure of PDCP layer device 1-3 or the second PDCP layer device performing the reordering function.

The case in which the PDCP layer device is connected to two RLC layer devices,

The case in which the PDCP layer device is configured for an LTE-wireless local area network (LAN) aggregation (LWA) bearer,

The case in which the PDCP layer device is connected to two RLC layer devices in the RLC AM mode or is configured for the LWA bearer, and then is connected to one RLC layer device in the RLC AM mode without a PDCP reestablishment procedure due to the most recent reconfiguration,

The case in which a packet duplicate technology is configured in the PDCP layer device,

The case in which the PDCP layer device is connected to at least one RLC layer device in which an out-of-sequence delivery function is configured (or an out-of-sequence delivery function configuration indicator of the RLC layer device is configured as a TRUE value),

The case in which the PDCP layer device is connected to one RLC layer device in the RLC AM mode or the RLC UM mode or two (or a plurality of) RLC layer devices in the RLC AM mode or the RLC UM mode in which the out-of-sequence delivery function is configured (or the out-of-sequence delivery function configuration indicator of the RLC layer device is configured as a TRUE value),

The case in which the PDCP layer device is configured for a DAPS bearer,

The case in which the PDCP layer device is configured for the DAPS bearer and is not configured to the DAPS bearer after the most recent reconfiguration,

The RLC layer device described in the disclosure may indicate an E-UTRA RLC layer device, an LTE RLC layer device, or an NR RLC layer device, and the PDCP layer device may indicate an E-UTRA PDCP layer device, an LTE PDCP layer device, or an NR PDCP layer device.

Further, the RLC layer device (entity) described in the disclosure may be replaced with another layer device performing the same function. In another example, the PDCP layer device may be replaced with another layer device performing the same function. In another example, the bearer may be replaced with another entity performing the same function. For example, the disclosure is not limited to the terms RLC layer device and PDCP layer device, and other terms referring to targets having the equivalent technical meaning may be used.

For convenience of description, the disclosure uses terms and names defined in a 3rd generation partnership project long-term evolution (3GPP LTE) standard. However, the disclosure is not limited by the terms and names defined in the 3rd generation partnership project long-term evolution (3GPP LTE) standard, and may be equally applied to a system following another standard. For example, the disclosure may be equally applied to a 5G or 6G communication system for supporting a higher data transmission rate.

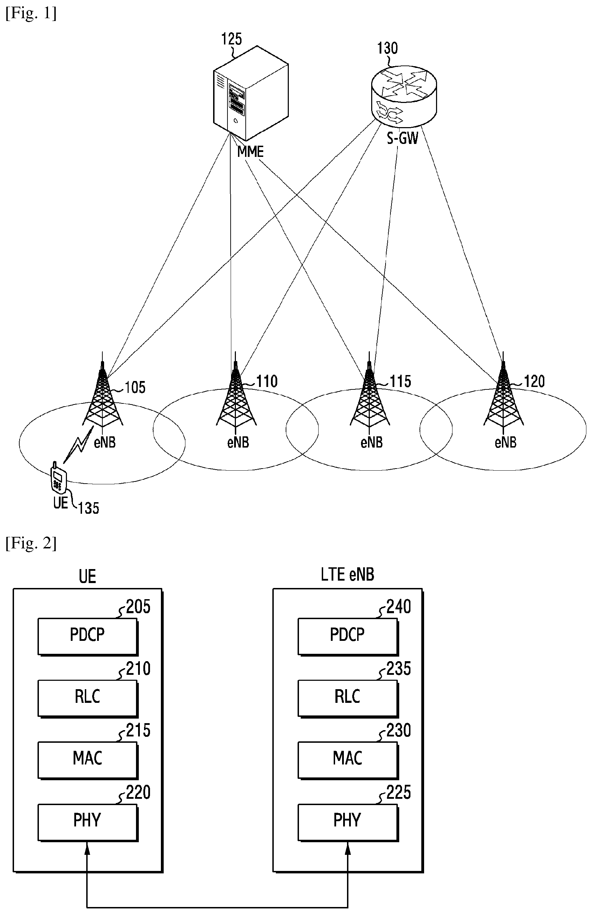

FIG. 1 illustrates a structure of an LTE system according to an embodiment of the disclosure.

Referring to FIG. 1, a radio access network of the LTE system includes next-generation base stations (evolved node Bs, hereinafter, referred to as ENBs, Node Bs, or base stations) 105, 110, 115, and 120, a mobility management entity (MME) 125, and a serving gateway (S-GW) 130. A user terminal (user equipment, hereinafter, referred to as a UE or a terminal) 135 accesses an external network through the ENBs 105 to 120 and the S-GW 130.

Referring to FIG. 1, the ENBs 105 to 120 correspond to the node Bs of the related art of the UMTS system. The ENB is connected to the UE 135 through a radio channel, and performs a more complicated role than that of the node B of the related art. In the LTE system, since all user traffic including a real-time service, such as voice over IP (VoIP) via an Internet protocol are served through a shared channel, an apparatus for collecting and scheduling status information on buffer statuses of UEs, available transmission power status, and channel statuses is required, and the ENBs 105 to 120 may serve as this apparatus. One ENB generally controls a plurality of cells. For, example, in order to implement a transmission rate of 100 Mbps, the LTE system uses an orthogonal frequency division multiplexing (OFDM) as a radio access technology in a bandwidth of 20 megahertz (MHz). Further, an adaptive modulation and coding (AMC) scheme of determining a modulation scheme and a channel coding rate is applied depending on the channel status of the UE. The S-GW 130 is a device providing a data bearer, and generates or removes the data bearer under a control of the MME 125. The MME is a device performing various control functions as well as a mobility management function of the UE and is connected to a plurality of ENBs.

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by the terms and names defined in the 3GPP LTE standards, and may be applied in the same way to systems that conform other standards. For example, the disclosure may also be applied to 5G or 6G communication system for supporting a higher data transfer rate in the same way.

FIG. 2 illustrates a wireless protocol structure in the LTE system according to an embodiment of the disclosure.

Referring to FIG. 2, the UE and the ENB include packet data convergence protocols (PDCPs) 205 and 240, radio link controls (RLCs) 210 and 235, and medium access controls (MACs) 215 and 230, respectively, in the wireless protocol of the LTE system. The packet data convergence protocols (PDCPs) 205 and 240 perform an operation of compressing/reconstructing an IP header. Main functions of the PDCP are described below.
- Header compression and decompression function (Header compression and decompression: robust header compression (ROHC) only)
- User data transmission function (Transfer of user data)
- Sequential delivery function (In-sequence delivery of upper layer PDUs at PDCP re-establishment procedure for RLC AM)
- Sequence re-arrangement function (For split bearers in DC (only support for RLC AM): PDCP PDU routing for transmission and PDCP PDU reordering for reception)
- Duplicate detection function (Duplicate detection of lower layer SDUs at PDCP re-establishment procedure for RLC AM)
- Retransmission function (Retransmission of PDCP SDUs at handover and, for split bearers in DC, of PDCP PDUs at PDCP data-recovery procedure, for RLC AM)
- Ciphering and deciphering function (Ciphering and deciphering)
- Timer-based SDU removal function (Timer-based SDU discard in uplink)

Radio Link Control (RLC) 210 or 235 reconfigures the PDCP Packet Data Unit (PDU) to be the proper size and performs an automatic repeat request (ARQ) operation. Main functions of the RLC are described below.
- Data transmission function (Transfer of upper layer PDUs)
- ARQ function (Error Correction through ARQ (only for AM data transfer))
- Concatenation, segmentation, and reassembly function (Concatenation, segmentation, and reassembly of RLC SDUs (only for UM and AM data transfer))
- Re-segmentation function (Re-segmentation of RLC data PDUs (only for AM data transfer))
- Reordering function (Reordering of RLC data PDUs (only for UM and AM data transfer)
- Duplication detection function (only for UM and AM data transfer))
- Error detection function (Protocol error detection (only for AM data transfer))
- RLC SDU deletion function (RLC SDU discard (only for UM and AM data transfer))
- RLC re-establishment function (RLC re-establishment)

The MACs 215 and 230 are connected with various RLC layer devices included in one UE, and perform an operation for multiplexing RLC PDUs to the MAC PDU and demultiplexing the RLC PDUs from the MAC PDU. Main functions of the MAC are described below.
- Mapping function (Mapping between logical channels and transport channels)
- Multiplexing and demultiplexing function (Multiplexing/demultiplexing of MAC SDUs belonging to one or different logical channels into/from Transport Blocks (TB) delivered to/from the physical layer on transport channels)
- Scheduling information report function (Scheduling information reporting)
- HARQ function (Error correction through HARQ)
- Logical channel priority control function (Priority handling between logical channels of one UE)
- UE priority control function (Priority handling between UEs by means of dynamic scheduling)
- MBMS service identification function (MBMS service identification)
- Transport format selection function (Transport format selection)
- Padding function (Padding)

The physical (PHY) layers 220 and 225 perform an operation for channel-coding and modulating higher-layer data to generate an OFDM symbol and transmitting the OFDM symbol through a radio channel or demodulating and channel-decoding the OFDM symbol received through a radio channel and transmitting the demodulated and channel-decoded OFDM symbol to a higher layer.

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by the terms and names defined in the 3GPP LTE standards, and may be applied in the same way to systems that conform other standards. For example, the disclosure may also be applied to 5G or 6G communication system for supporting a higher data transfer rate in the same way.

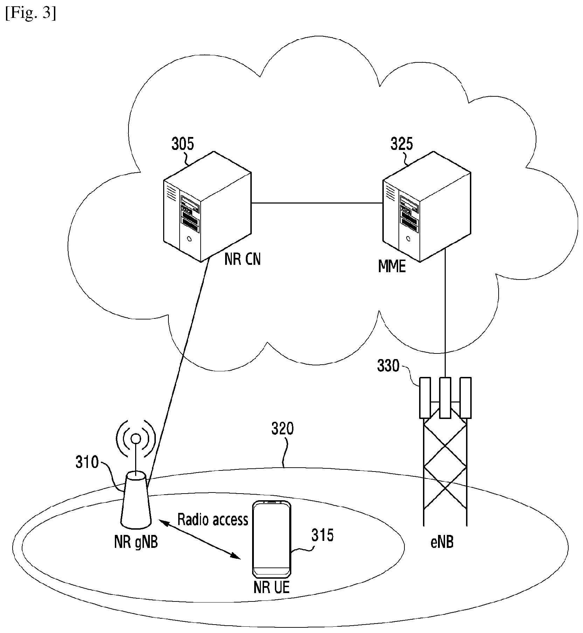

FIG. 3 illustrates a structure of a next-generation mobile communication system according to an embodiment of the disclosure.

Referring to FIG. 3, a radio access network of a next-generation mobile communication system (hereinafter, NR or 5G) includes a next-generation base station 310 (new radio node B, hereinafter, referred to as an NR gNB or an NR base station) and a new radio core network (NR CN) 305. A user terminal 315 (new radio user equipment, hereinafter, referred to as a NR UE or a terminal) accesses an external network 320 through the NR gNB 310 and the NR CN 305.

Referring to FIG. 3, the NR gNB 310 corresponds to an evolved Node B (eNB) of the LTE system of the related art. The NR gNB may be connected to an NR UE 315 through a radio channel and may provide better service than the node B of the related art. Since all user traffic is served through a shared channel in the next-generation mobile communication system, an apparatus for collecting and scheduling status information of buffer statuses, available transmission power statuses, and channel statuses of UEs is required, and the NR NB 310 serves as this apparatus. One NR gNB generally controls a plurality of cells. The NR gNB may have a bandwidth wider than the maximum bandwidth of the related art in order to implement super-high-speed data transmission compared to LTE of the related art and may apply orthogonal frequency division multiplexing (OFDM) through radio access technology and further apply beamforming technology. Further, an adaptive modulation and coding (AMC) scheme of determining a modulation scheme and a channel coding rate is applied depending on the channel status of the UE. The NR CN 305 performs functions supporting mobility, configuring bearers, configuring QoS, and the like. The NR CN is a device for performing a function of managing the mobility of the UE and various control functions, and is connected to a plurality of base stations. Further, the next-generation mobile communication system may be linked to the LTE system of the related art, and the NR CN is connected to an MME 325 through a network interface. The MME 325 is connected to an eNB 330, which is a base station of the related art.

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by the terms and names defined in the 3GPP LTE standards, and may be applied in the same way to systems that conform other standards. For example, the disclosure may also be applied to 5G or 6G communication system for supporting a higher data transfer rate in the same way.

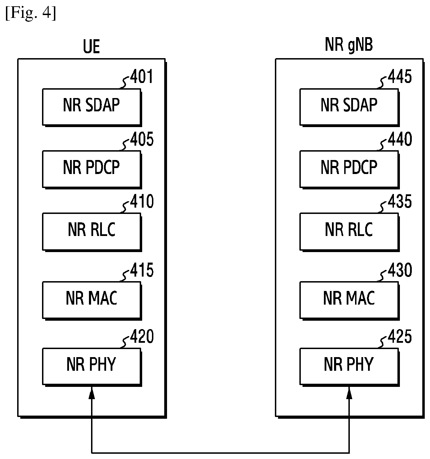

FIG. 4 illustrates a wireless protocol structure of the next-generation mobile communication system according to an embodiment of the disclosure.

Referring to FIG. 4, the UE and the NR gNB include NR SDAPs 401 and 445, NR PDCPs 405 and 440, NR RLCs 410 and 435, and NR MACs 415 and 430 in the wireless protocol of the next-generation mobile communication system.

Main functions of the NR SDAPs 401 and 445 may include some of the following functions.

User data transmission function (transfer of user-plane data)

Function of mapping QoS flow and a data bearer for uplink and downlink (mapping between a QoS flow and a DRB for both DL and UL)

Function of marking a QoS flow ID for uplink and downlink (marking QoS flow ID in both DL and UL packets)

Function of mapping reflective QoS flow to a data bearer for uplink SDAP PDUs (reflective QoS flow to DRB mapping for the UL SDAP PDUs)

With respect to the SDAP layer device, the UE may receive a configuration as to whether to use a header of the SDAP layer device or a function of the SDAP layer device for each PDCP layer device, each bearer, or each logical channel through an RRC message. If the SDAP header is configured, a 1-bit indicator of NAS reflective QoS of the SDAP header and a 1 bit-indicator of AS reflective QoS may indicate that the UE updates or reconfigures information on mapping of QoS flow and a data bearer in uplink and downlink. The SDAP header may include QoS flow ID information indicating the QoS. The QoS information may be used as data-processing-priority or scheduling information to support a seamless service.

Main functions of the NR PDCPs 405 and 440 may include some of the following functions.
- Header compression and decompression function (header compression and decompression: ROHC only)
- User data transmission function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU removal function (Timer-based SDU discard in uplink)

The reordering function of the NR PDCP device is a function of sequentially reordering PDCP PDUs received by a lower layer based on a PDCP Sequence Number (SN), and may include a function of sequentially transferring the reordered data to a higher layer, a function of directly transmitting the recorded data regardless of the order, a function of recording PDCP PDUs lost due to the reordering, a function of reporting statuses of the lost PDCP PDUs to a transmitting side, and a function of making a request for retransmitting the lost PDCP PDUs.

The main functions of the NR RLCs 410 and 435 may include some of the following functions.
- Data transmission function (Transfer of upper layer PDUs)
- Sequential delivery function (In-sequence delivery of upper layer PDUs)
- Non-sequential delivery function (Out-of-sequence delivery of upper layer PDUs)
- ARQ function (Error correction through ARQ)
- Concatenation, segmentation, and reassembly function (Concatenation, segmentation, and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU deletion function (RLC SDU discard)
- RLC re-establishment function (RLC re-establishment)

The sequential delivery function (in-sequence delivery) of the NR RLC device is a function of sequentially transmitting RLC SDUs received from a lower layer to the higher layer. The sequential delivery function (in-sequence delivery) of the NR RLC device may include a function of, when one original RLC SDU is divided into several RLC SDUs and received, reassembling and transmitting the RLC SDUs and a function of reordering the received RLC PDUs according to an RLC sequence number (SN) or a PDCP sequence number (SN). The sequential delivery function (in-sequence delivery) of the NR RLC device may include a function of reordering the sequences and recording lost RLC PDUs. Further, the function may include a function of transmitting a state report of the lost RLC PDUs to a transmitting side, a function of making a request for retransmitting the lost RLC PDUs, and a function of, when there is a lost RLC SDU, sequentially transmitting only RLC SDUs before the lost RLC SDU to the higher-layer. In addition, the function may include a function of sequentially transmitting all RLC SDUs received before the time starts to the higher layer when a predetermined timer expires even through there is a lost RLC SDU, and a function of sequentially transmitting all RLC SDUs received up to now to the higher layer when a predetermined timer expires even through there is a lost RLC SDU. The sequential delivery function (in-sequence delivery) of the NR RLC device may process the RLC PDUs sequentially in the order of reception thereof (according to an arrival order regardless of a serial number or a sequence number) and may transfer the RLC PDUs to the PDCP device regardless of the sequence thereof (out-of-sequence delivery). In the case of segments, the NR RLC device may receive segments that are stored in the buffer or are to be received in the future, reconfigure the segments to be one complete RLC PDU, process the RLC PDU, and then transmit the same to the PDCP device. The NR RLC layer may not include a concatenation function, and the function may be performed by the NR MAC layer, or may be replaced with a multiplexing function of the NR MAC layer.

The non-sequential function (out-of-sequence delivery) of the NR RLC device is a function of transferring RLC SDUs received from a lower layer directly to a higher layer regardless of the sequence of the RLC SDUs, and may include, when one original RLC SDU is divided into a plurality of RLC SDUs and then received, a function of reassembling and transmitting the RLC PDUs and a function of storing RLC SNs or PDCP SNs of the received RLC PDUs, reordering the RLC PDUs, and recording lost RLC PDUs.

The NR MACs 415 and 430 may be connected to a plurality of NR RLC layer devices configured in one UE, and the main functions of the NR MACs may include some of the following functions.
- Mapping function (Mapping between logical channels and transport channels)
- Multiplexing and demultiplexing function (Multiplexing/demultiplexing of MAC SDUs)
- Scheduling information report function (Scheduling information reporting)
- HARQ function (Error correction through HARQ)
- Logical channel priority control function (Priority handling between logical channels of one UE)
- UE priority control function (Priority handling between UEs by means of dynamic scheduling)
- MBMS service identification function (MBMS service identification)
- Transport format selection function (Transport format selection)
- Padding function (Padding)

The NR PHY layers 420 and 425 perform an operation for channel-coding and modulating higher-layer data to generate an OFDM symbol and transmitting the OFDM symbol through a radio channel or demodulating and channel-decoding the OFDM symbol received through the radio channel and transmitting the demodulated and channel-decoded OFDM symbol to the higher layer.

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

Furthermore, an RLC entity as described herein may be replaced by any other entity performing the same function. As another example, a PDCP entity may be replaced by any other entity performing the same function. As still another example, a bearer may be replaced by any other entity performing the same function. For example, the disclosure is not limited by the terms "RLC entity" and "PDCP entity", and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by the terms and names defined in the 3GPP LTE standards, and may be applied in the same way to systems that conform other standards. For example, the disclosure may also be applied to 5G or 6G communication system for supporting a higher data transfer rate in the same way.

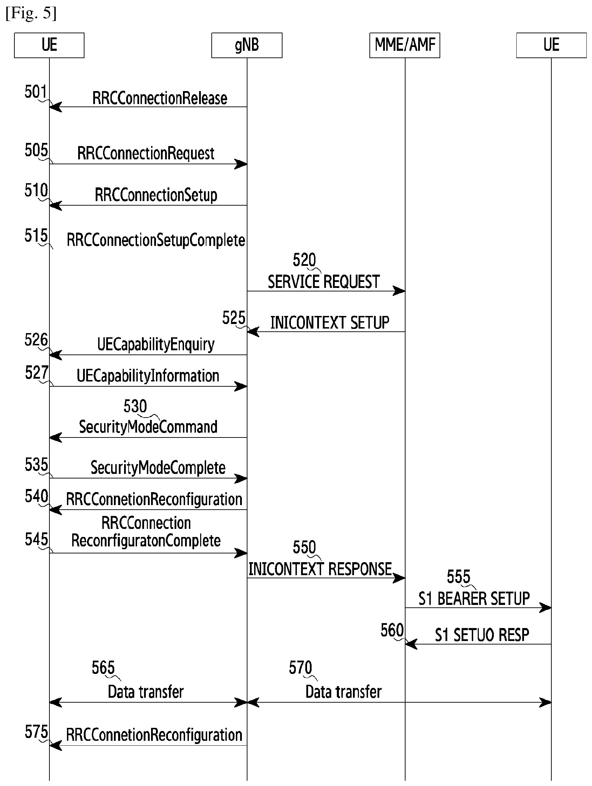

FIG. 5 illustrates a procedure in which a UE switches from an RRC idle mode to an RRC-connected mode and configures a connection to a network according to an embodiment of the disclosure.

Referring to FIG. 5, if the UE transmitting and receiving data in the RRC-connected mode has no data transmission/reception for a predetermined reason or for a predetermined time, the gNB may transmit an RRCConnectionRelease message to the UE, and thus the UE may switch to the RRC idle mode in operation 501. When the UE of which the connection is not currently configured (hereinafter, referred to as an idle mode UE) has data to be transmitted, the UE performs an RRC connection establishment process with the gNB. The UE establishes backward transmission synchronization with the eNB through a random access process and transmits an RRCConnectionRequest message to the eNB in operation 505. The message includes an identifier of the UE and a reason (establishmentCause) to establish the connection. The gNB transmits an RRCConnectionSetup message to allow the UE to establish the RRC connection in operation 510.

The message may include configuration information for each service/bearer/each RLC device, for each logical channel, or for each bearer, whether to use an ROHC for each bearer/logical channel, ROHC configuration information (for example, an ROHC version, initial information, or the like), statusReportRequired information (information indicating a PDCP status report to the UE by the gNB), and drb-ContinueROHC information (configuration information indicating the maintenance and use of ROHC configuration information and transmitted while being included in PDCP layer device configuration information (pdcp-config)). Further, the message includes RRC connection configuration information and the like. A bearer for the RRC connection is also referred to as a signaling radio bearer (SRB), and is used for transmitting and receiving an RRC message which is a control message between the UE and the gNB.

The UE establishing the RRC connection transmits an RRCConnectionSetup-Complete message to the gNB in operation 515. The message may include a control message corresponding to a SERVICE REQUEST by which the UE makes a request for establishing a bearer for a predetermined service to the MME. The gNB transmits the SERVICE REQUEST message included in the RRCConnetionSetupComplete message to the MME or the AMF in operation 520, and the MME or the AMF determines whether to provide the service requested by the UE. When it is determined to provide the service requested by the UE based on the determination result, the MME or the AMF transmits an INITIAL CONTEXT SETUP REQUEST message to the gNB in operation 525. The message includes quality of service (QoS) information to be applied to data radio bearer (DRB) configuration and security-related information to be applied to the DRB (for example, a security key and a security algorithm).

Further, when the gNB does not receive UE capability information from the MME or the AMF, the gNB may transmit a UE capability information request message to the UE in order to identify the UE capability information in operation 526. When receiving the UE capability information request message, the UE may configure and generate a UE capability information message and report the same to the gNB in operation 527. The UE capability information message may include information indicating whether the UE supports functions. For example, the UE capability may be reported to the gNB through an indicator indicating whether or not the UE supports an efficient handover method (dual active protocol stack (DAPS)) described in the disclosure. >Further, the UE capability information may indicate whether the UE supports the out-of-sequence delivery function through the RLC layer device or supports the Ethernet header compression function through the PDCP layer device.

The gNB exchanges a SecurityModeCommand message 530 and a SecurityMode-Complete message 535 with the UE in order to set security. When security has been completely set, the gNB transmits an RRCConnectionReconfiguration message to the UE in operation 540.

The message may include configuration information for each service/bearer/each RLC device, for each logical channel, or for each bearer, whether to use an ROHC for each bearer/logical channel, ROHC configuration information (for example, an ROHC version, initial information, or the like), statusReportRequired information (information indicating a PDCP status report to the UE by the gNB), and drb-ContinueROHC information (configuration information indicating the maintenance and use of ROHC configuration information and transmitted while being included in PDCP layer device configuration information (pdcp-config)). Further, the message includes RRC connection configuration information and the like. A bearer for the RRC connection is also referred to as a signaling radio bearer (SRB), and is used for transmitting and receiving an RRC message which is a control message between the UE and the gNB.

The message includes configuration information of the DRB to process user data, and the UE applies information to configure the DRB and transmits an RRCConnectionReconfigurationComplete message to the gNB in operation 545. The gNB completely establishing the DRB with the UE transmits an INITIAL CONTEXT SETUP COMPLETE message to the MME or the AMF in operation 550, and the MME or the AMF receiving the INITIAL CONTEXT SETUP COMPLETE message exchanges an S1 BEARER SETUP message and an S1 BEARER SETUP RESPONSE message in order to establish an S1 bearer with the S-GW in operations 555 and 560. The S1 bearer is a connection for data transmission established between the S-GW and the eNB and corresponds to the DRB in one-to-one correspondence. When the process is completed, the UE transmits and receives data to and from the gNB through the S-GW in operations 565 and 570. As described above, the general data transmission process largely consists of three steps, such as RRC connection setup, security setup, and DRB setup. Further, the gNB may transmit an RRC Connection Reconfiguration message in order to provide a new configuration to the UE or add or change the configuration for a predetermined reason in operation 575.

Through the RRC message of FIG. 5, the out-of-sequence delivery function (rlc-OutOfOrderDelivery) described in the disclosure may be configured in a protocol layer device (for example, the RLC layer device) by the following configuring method. The disclosure considers and describes a protocol layer device applying a method of configuring or performing the out-of-sequence delivery function as the RLC layer device, and the RLC layer device may be easily expanded to a PDCP layer device or another higher-layer device. Further, the disclosure describes a configuration method of saving transmission resources and significantly reducing transmission delay by configuring the Ethernet header compression function in PDCP layer device configuration information for any bearer (or the same bearer) and configuring the out-of-sequence delivery function in RLC layer device configuration information for the bearer, a method of operating the PDC layer device, or a method of operating the RLC layer device.

First configuration method: when transmitting an RRC message (for example, an RRCReconfiguration message (RRC Connection Reconfiguration), an RRCSetup message (RRC Connection Setup), or an RRCResume message (RRC Connection Resume)) to the UE, the BS may configure an indicator (for example, rlc-OutOfOrderDelivery) of configuring an out-of-sequence delivery function in RLC layer device configuration information (for example, rlf-config) of transmission resource configuration information (for example, Radio Resource Config Dedicated) included in the RRC message and configure the out-of-sequence delivery function in an RLC layer device for each bearer of the UE (for example, the indicator is configured and a value thereof is configured as TRUE) or may not configure the same (for example, there is no indicator or the indicator is configured and the value thereof is configured as FALSE). The indicator of configuring the out-of-sequence delivery function (for example, rlc-OutOfOrderDelivery) may indicate transmission of data to a higher-layer device (for example, the PDCP layer device) regardless of the order or through an out-of-sequence delivery method when the RLC layer device corresponding to RLC layer device configuration information in which the indicator (for example, rlc-OutOfOrderDelivery) of configuring the out-of-sequence delivery function is configured transmits received data. The out-of-sequence delivery function may be configured for an acknowledged mode (AM mode) (AM RLC entity) or an unacknowledged mode (UM mode) (UM RLC entity) of the RLC layer device. When the indicator of configuring the out-of-sequence delivery function is configured in RLC layer device configuration information for the RLC layer device or is configured as the TRUE value, the RLC layer device may perform the out-of-sequence delivery function (that is, when complete data (complete RLC SDU) is received regardless of received RLC serial numbers or regardless of the order of RLC serial numbers (or when data which is not segmented data is received), and directly transfer the data (RLC SDU) to the higher-layer device (for example, the RLC layer device may remove the RLC header and transfer the data (RLC SDU) without storing the data. On the other hand, when segmented data is received, the RLC layer device may start a reassembly timer (t-Reassembly) of the RLC layer, store the segmented data in the buffer for reassembly to configure complete data, and wait for the remaining segmented data). The PDCP layer device connected to the RLC layer device in which the out-of-sequence delivery function is configured may configure or perform a reordering function. The reordering function of the PDCP layer device reorders the data received from a lower-layer device (for example, the RLC layer device) according to the order of PDCP serial numbers and transfers the data to the higher-layer device in ascending order with a gap of the PDCP serial numbers (or COUNT value) or without any difference. If the Ethernet header compression function is configured for the PDCP layer device, when arranging data in the order of PDCP serial numbers and transferring the data to the higher-layer device in ascending order, the PDCP layer device may perform an Ethernet header decompression procedure for the data (for example, PDCP SDU or PDCP PDU) and transfer the Ethernet header decompressed data (uncompressed PDCP SDU or PDCP SDU) to the higher-layer device. When the PDCP serial number (or COUNT value) gap or difference is generated, the RLC layer device may start a reordering timer and wait for data having a PDCP serial number (or COUNT value) value corresponding to the PDCP serial number (or COUNT value) gap or difference until the reordering timer expires. If the data having the PDCP serial number (or COUNT value) value corresponding to the PDCP serial number (or COUNT value) gap or difference is received before the reordering timer expires, the RLC layer device may stop the reordering timer or transfer data in order to the higher-layer device. If the Ethernet header compression function is configured for the PDCP layer device, when arranging data in the order of PDCP serial numbers and transferring the data to the higher-layer device in ascending order, the PDCP layer device may perform an Ethernet header decompression procedure for the data (for example, PDCP SDU or PDCP PDU) and transfer the Ethernet header decompressed data (uncompressed PDCP SDU or PDCP SDU) to the higher-layer device. If the data (for example, PDCP SDU or PDCP PDU) is not received until the timer expires, the stored data is transferred to the higher-layer device in ascending order of PDCP serial numbers (or COUNT values) up to a predetermined PDCP serial number (or COUNT value) when the reordering timer expires. If the Ethernet header compression function is configured for the PDCP layer device, when the data is transferred to the higher-layer device, an Ethernet header decompression procedure may be performed for the data (for example, PDCP SDU or PDCP PDU) and the Ethernet header decompressed data (uncompressed PDCP SDU or PDCP SDU) may be transferred to the higher-layer device. If an indicator indicating the PDCP reestablishment procedure for the PDPC layer device is configured or the PDCP layer device performs the PDCP reestablishment procedure when the UE receives the RRC message and if the bearer is connected (or mapped) to the RLC UM mode and uses a reordering function, the UE may perform the Ethernet header decompression procedure for stored data (if there is the stored data) and then transfer the data in ascending order of COUNT values connected to the data when the Ethernet header compression (EHC) function is configured (or the header compression function using the EHC (or the header decompression function) is configured). If the PDCP layer device is connected to at least one RLC layer device in which the out-of-sequence delivery function is configured, the UE may reset the Ethernet header compression (EHC) protocol for the downlink when an indicator (drb-ContinueEHC-DL) indicating the continuous use of the Ethernet header compression function for the downlink is not configured and the Ethernet header compression function is configured. In another method, if an indicator indicating the PDCP reestablishment procedure for the PDPC layer device is configured or the PDCP layer device performs the PDCP reestablishment procedure when the UE receives the RRC message and if the bearer is connected (or mapped) to the RLC UM mode and uses a reordering function, the UE may perform the Ethernet header decompression procedure for stored data (if there is the stored data) and then transfer the data in ascending order of COUNT values connected to the data when the Ethernet header compression (EHC) function is configured (or the header compression function using the EHC (or the header decompression function) is configured) if the PDCP layer device is connected to at least one RLC layer device in which the out-of-sequence delivery function is configured. If an indicator (drb-ContinueEHC-DL) indicating the continuous use of the Ethernet header compression function for the downlink is not configured and the Ethernet header compression function is configured, the UE may reset the Ethernet header compression (EHC) protocol for the downlink. Otherwise (or when the UE is not connected to the PDCP layer device and at least one RLC layer device in which the out-of-order delivery function is configured), the UE may transfer the COUNT value connected to each piece of data to higher-layer devices in the ascending order with respect to the stored data (if there are stored data) (when the UE is not connected to the PDCP layer device and at least one RLC layer device in which the out-of-order function is configured, the Ethernet header compression function cannot be configured, and thus it is not needed to perform the Ethernet header decompression procedure for the stored data. For example, the case in which the PDCP layer device connected to the RLC UM mode uses the reordering function corresponds to the case in which the out-of-order delivery function is configured in a split bearer (split DRB or a bearer in which a packet duplicate function is configured), an LTE-WLAN aggregation (LWA) bearer (LWA DRB), or the RLC layer device, and the Ethernet header compression function has high implementation complexity and thus cannot be configured in the split bearer or the LWA bearer. Accordingly, when the PDCP layer device connected to the RLC UM mode uses the reordering function, the Ethernet header compression function may be configured only when the out-of-order delivery function is configured in the RLC layer device, and when transmitting the stored data to a higher-layer device, the PDCP layer device needs to perform the Ethernet header decompression procedure and transmits the data.

When an uplink data compression (UDC) method is configured for the downlink or the uplink in the configuration information of the PDCP layer device for each bearer in the RRC message, the configuration of the out-of-sequence delivery function in an LTE RLC layer device connected to an LTE or NR PDCP layer device in which the uplink data compression method may be restricted. This is because the PDCP layer device should apply the decompression procedure in ascending order of PDCP serial numbers or COUNT values when the decompression procedure is performed for data to which the uplink data compression (UDC) method is applied, and thus decompression failure is generated if the PDCP layer device having no ordering function performs the decompression procedure out of sequence for the data non-sequentially transmitted from the RLC layer device.

Configuration information of a protocol layer device (for example, an SDAP layer device, or a PDCP layer device, an RLC layer device, a MAC layer device, or a PHY layer device) may be configured for each bearer in an RRC message (for example, an RRCSetup message, an RRCResume message, or an RRCReconfiguration). For example, when a PDCP layer device reestablishment procedure is performed, an indicator (drb-ContinueROHC) indicating whether to continuously use context of the header compression protocol (robust header compression (ROHC)) may be configured in the configuration information of the PDCP layer device. Alternatively, when the PDCP layer device reestablishment procedure is performed, an indicator (drb-ContinueEHC-DL or drb-ContinueEHC-UL) indicating whether to continuously use context of the header compression protocol (Ethernet header compression (EHC)) may be configured for each of the downlink or the uplink in the configuration information of the PDCP layer device. Alternatively, an indicator indicating whether to perform the PDCP layer device reestablishment procedure may be included, or a timer value may be configured when the PDCP layer device operates a reordering timer (t-Reordering). A value of the reordering timer may be always included and configured when a split bearer or an LWA bearer is established or reestablished or when a bearer connected to at least one RLC layer device in which an out-of-sequence delivery indicator (rlc-OutOfOrderDelivery) of the RLC layer device is configured is established or reestablished. Further, when the header compression protocol (for example, EHC) is configured, it may be configured whether to use the same for the uplink or the downlink through an indicator, the size of a context identity used for the header compression protocol (for example, EHC) may be configured as one of the two sizes, and the size of an EHC header (a header generated by the header compression protocol of the PDCP layer device) used for the header compression protocol may be determined as 1 byte or 2 bytes according to the size of the context identity. Further, an out-of-sequence delivery indicator of the RLC layer device may be configured in the configuration information of the RLC layer device in the RRC message and the RLC layer device may perform the out-of-sequence delivery procedure, and when the indicator is not configured, the RLC layer device may perform the in-sequence delivery procedure.

In the disclosure, the header compression protocol may indicate the ROHC or the EHC.

In the disclosure, the bearer may be a meaning including an SRB and a DRB, the SRB refers to a signaling radio bearer, and the DRB refers to a data radio bearer. The SRB is mainly used to transmit and receive an RRC message of the RRC layer device, and the DRB is mainly used to transmit and receive user layer data. An unacknowledged mode (UM) DRB is a DRB using the RLC layer device operating in an UM mode, and an acknowledged mode (AM) DRB is a DRB using the RLC layer device operating in an AM mode.

Hereinafter, an efficient data processing method of RLC layer devices proposed in the disclosure is described.

A first embodiment of a method of processing received data by the RLC layer device proposed in the disclosure is a method of processing received data which can be applied to the RLC AM mode (for example, an RLC AM mode of the E-UTRA or LTE RLC layer device) and may define and use the following window parameters.

RLC status parameter 1-1 (for example, VR(R)): this state parameter is a parameter storing, having, or indicating an RLC serial number after an RLC serial number of the sequentially completely received last data (for example, AMD PDU). This state parameter serves as a lower boundary part of the window has an initial value configured as 0, and RLC status parameter value 1-1 is updated whenever having the RLC serial number which is the same as the vale stored by RLC status parameter 1-1.

RLC status parameter 1-2 (for example, VR(X)): this state parameter is a parameter storing, having, or indicating an RLC serial number after an RLC serial number of data (for example, AMD PDU or RLC data PDU) having triggered the reordering timer.

RLC status parameter 1-3 (for example, VR(H)): this state parameter is a parameter storing, having, or indicating an RLC serial number after an RLC serial number of data (for example, UMD PDU) having the highest RLC serial number among the received data (for example, AMD PDU or RLC data PDU).

RLC status parameter 1-4 (for example, VR(MS)): this state parameter is a parameter storing, having, or indicating an RLC serial number value which can be indicated as an ACK_SN value or an RLC serial number as high as possible when it is required to configure an RLC status report (RLC status PDU).

RLC status parameter 1-5 (for example, VR(MR)): this status parameter is a parameter storing or indicating a value which is the same as a value obtained by adding RLC status parameter value 1-1 + the window size or a parameter storing, having, or indicating an RLC serial number value of the first data outside the window beyond the window. The parameter serves as a high edge of the window.

In the first embodiment of the method of processing received data by the RLC layer device according to the disclosure, the reception window may be defined by RLC serial numbers larger than or equal to RLC status parameter value 1-1 and smaller than RLC status parameter value 1-5, data having RLC serial numbers belonging to the range is considered as data within the reception window and data having RLC serial numbers which do not belong to the range is considered as data outside the reception window. The window size may be determined as 2^ (the length of RLC serial numbers - 1).

A detailed operation of the first embodiment of the method of processing received data by the RLC layer device (for example, LTE RLC layer device or E-UTRA RLC layer device) according to the disclosure is described below.

The reception RLC layer device in the RLC AM mode processes data from y bytes to z bytes as follows, the data (for example, AMD PDU) corresponding to the received RLC serial number x when the data (for example, RLC data PDU) received from the lower-layer device is received.
1> If the RLC serial number x is outside the window
1> alternatively, data from y bytes to z bytes of data having the RLC serial number x has been received before,
2> the received data (for example, RLC data PDU) is discarded.
1> Otherwise
2> the received data (for example, RLC data PDU) is stored in the reception buffer.
2> If a part of the received data (partial data (segment) corresponding to some bytes) has been received before
3> overlapping data of the received data (overlappingly received) is discarded.

When the data corresponding to the RCL serial number x is stored in the reception buffer, the reception RLC layer device in the RLC AM mode processes the data as follows.
1> If the out-of-sequence delivery function indicator of the RLC layer device is configured
2> if all byte data (byte segments) of data (for example, AMD PDU) corresponding to the RLC serial number x is received}
3> all of partial data (byte segments) received for the RLC serial number x may be reassembled to configure the RLC SDU, an RLC header may be removed, and the reassembled data (RLC SDU) may be transferred to the higher-layer device if it has never been transferred to the higher-layer device.
1> If the RLC serial number x is larger than or equal to RLC status parameter 1-3
2> RLC status parameter 1-3 is updated to a value of x+1.
1> If all byte data (byte segments) of data (for example, AMD PDU) corresponding to the RLC serial number which is the same as RLC status parameter value 1-4 is received
2> RLC status parameter value 1-4 is updated to the RLC serial number corresponding the first data (for example, AMD PDU) which is larger than current RLC status parameter value 1-4 and of which all the partial data (byte segments) have not been received.
1> If the RLC serial number x is the same as RLC status parameter value 1-1
2> if all byte data (byte segments) of data (for example, AMD PDU) having the RLC serial number which is the same as RLC status parameter value 1-1 is received
3> RLC status parameter value 1-1 is updated to the RLC serial number corresponding the first data (for example, AMD PDU) which is larger than current RLC status parameter value 1-1 and of which all the partial data (byte segments) have not been received.
3> Current RLC status parameter value 1-5 is updated to a value of updated RLC status parameter 1-1 + window size.
2> All the partial data (byte segments) in sequence among the data outside the reception window or the data having RLC serial numbers (for example, AMD PDUs) corresponding RLC status parameter value 1-1 may be reassembled to configure the RLC SDU, an RLC header may be removed, and the reassembled data (RLC SDU) may be transferred to the higher-layer device if the data has never been transferred to the higher-layer device.
1> If the reordering timer is running
2> if RLC status parameter value 1-2 is the same as RLC status parameter value 1-1
2> alternatively, if RLC status parameter value 1-2 is outside the reception window and RLC status parameter value 1-2 is not the same as RLC status parameter value 1-5
3> the reordering timer is stopped and reset.
1> If the reordering timer is not running (including the case in which the timer is stopped by the procedure)
2> if RLC status parameter value 1-3 is larger than RLC status parameter value 1-1
3> the reordering timer starts.
3> RLC status parameter value 1-2 is configured as or updated to RLC status parameter value 1-3.

When the reordering timer expires, the reception RCL layer device operating the RLC AM mode operates as follows.
1> RLC status parameter value 1-4 is updated to the RLC serial number corresponding the first data (for example, AMD PDU) which is larger than or equal to current RLC status parameter value 1-2 and of which all the partial data (byte segments) have not been received.
1> If RLC status parameter value 1-3 is larger than RLC status parameter value 1-4
2> the reordering timer starts.
2> RLC status parameter value 1-2 is configured as or updated to RLC status parameter value 1-3.

A second embodiment of the method of processing received data by the RLC layer device proposed in the disclosure is a method of processing received data which can be applied to the RLC UM mode (for example, an RLC UM mode of the E-UTRA or LTE RLC layer device) and may define and use the following window parameters.

RLC status parameter 2-1 (for example, VR(UR)): this status parameter is a parameter storing, having, or indicating an RLC serial number of the earliest data (for example, UMD PDU) still considered for recording. Alternatively, this parameter is a parameter storing or having an RLC serial number of data (UMD PDU) of the lowest RLC serial number still considered for reordering.

RLC state parameter 2-2 (for example, VR(UX)): this state parameter is a parameter storing, having, or indicating an RLC serial number after an RLC serial number of data (for example, UMD PDU) having triggered the reordering timer.

RLC state parameter 2-3 (for example, VR(UH)): this state parameter is a parameter storing, having, or indicating an RLC serial number after an RLC serial number of data (for example, UMD PDU) having the highest RLC serial number among the received data (for example, UMD PDU).

In the second embodiment of the method of processing received data by the RLC layer device according to the disclosure, the reception window may be defined by RLC serial numbers which are larger than or equal to (RLC status parameter value 2-3 - reception window size) and smaller than RLC status parameter value 2-3, data having RLC serial numbers belonging to the range is considered as data within the reception window, and data having RLC serial numbers which do not belong to the range is considered data outside the reception window. The window size may be determined as 2^ (the length of RLC serial numbers - 1).

A detailed operation of the second embodiment of the method of processing received data by the RLC layer device (for example, LTE RLC layer device or E-UTRA RLC layer device) according to the disclosure is described below.

When receiving data (for example, UMD PDU) having the RLC serial number x from the lower-layer device, the reception RLC layer device in the RLC UM mode processes data as follows.
1> If the RLC serial number x is larger than RLC status parameter value 2-1 and smaller than RLC status parameter value 2-3, and has been received before
1> alternatively, if the RLC serial number x is larger than or equal to (RLC status parameter value 2-3 - window size) and smaller than RLC status parameter value 2-1
2> the received data (for example, UMD PDU) is discarded.
1> Otherwise
2> the received data (for example, RLC data PDU) is stored in the reception buffer.

When the data corresponding to the RCL serial number x is stored in the reception buffer, the reception RLC layer device in the RLC UM mode processes the data as follows.
1> If the out-of-sequence delivery function indicator of the RLC layer device is configured
2> if all byte data (byte segments) of data (for example, AMD PDU) corresponding to the RLC serial number x is received
3> all of some data (byte segments) received for the RLC serial number x may be reassembled to configure the RLC SDU, an RLC header may be removed, and the reassembled data (RLC SDU) may be transferred to the higher-layer device if it has never been transferred to the higher-layer device.
1> If the RLC serial number x is outside the window
2> RLC status parameter 2-3 is updated to a value of x+1.
2> all of partial data (byte segments) outside the reception window may be reassembled to configure the RLC SDU, an RLC header may be removed, and the reassembled data (RLC SDU) may be transferred to the higher-layer device in ascending order if it has never been transferred to the higher-layer device.
2> If RLC status parameter value 2-1 is outside the window
3> RLC status parameter value 2-1 is configured as or updated to (RLC status parameter value 2-3 - window size).
1> If data (for example, UMD PDU) corresponding to RLC status parameter value 2-1 has been already received
2> RLC status parameter value 2-1 is updated to the RLC serial number corresponding to the first data (for example, UMD PDU) which is larger than current RLC status parameter value 2-1 and has not been received.
2> all the partial data (byte segments) may be reassembled to configure the RLC SDU for data (for example, UMD PDU) having RLC serial numbers smaller than updated RLC status parameter value 2-1, an RLC header may be removed, and the reassembled data (RLC SDU) may be transferred to the higher-layer device in ascending order of RLC serial numbers if the data has not been transferred to the higher-layer device.
1> If the reordering timer is running
if RLC status parameter value 2-2 is equal to or smaller than RLC status parameter value 2-1
2> alternatively, RLC status parameter value 2-2 is outside the reception window and RLC status parameter value 2-2 is not the same as RLC status parameter value 2-3
3> the reordering timer is stopped and reset.
1> If the reordering timer is not running (including the case in which the timer is stopped by the procedure)
2> if RLC status parameter value 2-3 is larger than RLC status parameter value 2-1
3> the reordering timer starts.
3> RLC status parameter value 2-2 is configured as or updated to RLC status parameter value 2-3.

When the reordering timer expires, the reception RLC layer device operating in the RLC UM mode operates as follows.
1> RLC status parameter value 2-1 is updated to the RLC serial number corresponding to the first data (for example, UMD PDU) which is larger than or equal to current RLC status parameter value 2-2 and has not been received.
1> All the partial data (byte segments) may be reassembled to configure the RLC SDU for data (for example, UMD PDU) having RLC serial numbers smaller than updated RLC status parameter value 2-1, an RLC header may be removed, and the reassembled data (RLC SDU) may be transferred to the higher-layer device in ascending order of RLC serial numbers if the data has not been transferred to the higher-layer device.
1> If RLC status parameter value 2-3 is larger than RLC status parameter value 2-1
2> the reordering timer starts.
2> RLC status parameter value 2-2 is configured as or updated to RLC status parameter value 2-3.

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

Furthermore, an RLC entity as described herein may be replaced by any other entity performing the same function. As another example, a PDCP entity may be replaced by any other entity performing the same function. As still another example, a bearer may be replaced by any other entity performing the same function. For example, the disclosure is not limited by the terms "RLC entity" and "PDCP entity", and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by the terms and names defined in the 3GPP LTE standards, and may be applied in the same way to systems that conform other standards. For example, the disclosure may also be applied to 5G or 6G communication system for supporting a higher data transfer rate in the same way.

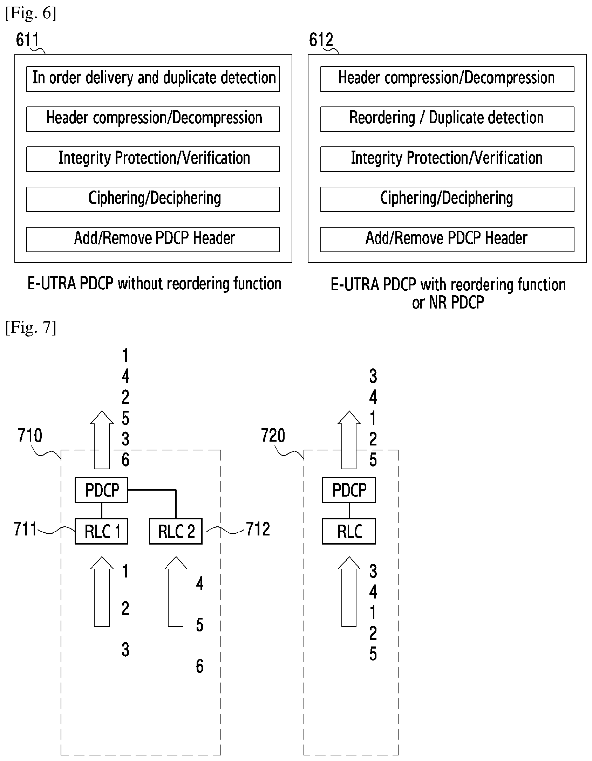

FIG. 6 illustrates an efficient data processing method of PDCP layer devices according to an embodiment of the disclosure.

FIG. 6 proposes efficient detailed structure and functions of PDCP layer devices in the disclosure, different PDPC layer structures may be connected and applied to different RLC layer devices for each of different bearers.

Referring to FIG. 6, for example, the UE may process and transmit or receive data by applying a first PDCP layer device structure and function 611 (for example, a structure or function of an LTE (E-UTRA) PDCP layer device having no reordering function, connected to the RLC UM or RLC AM) or a second PDCP layer device structure and function 612 (the case in which two (or a plurality of) RLC layer devices are configured in a split bearer, an LWA bearer, a bearer in which packet duplication is configured (or PDCP layer device), or one PDPC layer device, or an E-UTRA PDCP layer device or an NR PDCP layer device performing the ordering function corresponding to the PDCP layer device connected to at least one RLC layer device in which the out-of-sequence delivery function is configured) proposed in the disclosure for each bearer.

In the first PDCP layer device structure or the second PDCP layer device structure proposed in the disclosure, a reception operation of the reception PDCP layer device may be embodied using window parameters or a constant described below.

Window parameter 1-1 (Next_PDCP_TX_SN): is a window parameter used by an LTE(E-UTRA) PDCP layer device and indicates a PDCP serial number value of the next data (PDCP SDU), data (PDCP SDU) to be processed next, or data (PDCP SDU) to be transmitted next by the transmission PDC layer device. When the PCDP layer device is established, an initial value of the window parameter is configured as 0.

Window parameter 1-2 (Next_PDCP _RX_SN): is a window parameter used by the LTE PDCP (E-UTRA) layer device and indicates a PDCP serial number value expected to be received next by the reception PDCP layer device. When the PCDP layer device is established, an initial value of the window parameter is configured as 0.

Window parameter 1-3 (Last_Submitted_PDCP_RX_SN): is a window parameter used by the LTE PDCP (E-UTRA) layer device and indicates a PDCP serial number value corresponding to the last data (PDCP SDU) which the reception PDCP layer device transfers to the higher-layer device. When the PDPC layer device is established, the window parameter is configured as a first constant value (Maximum_PDCP_SN).

Window parameter 1-4 (Reordering_PDCP_RX_COUNT): is a window parameter used by the LTE PDCP(E-UTRA) layer device, and the window parameter may be used when the reception PDCP layer device performs the reordering function and indicates, stores, or has a COUNT value after a COUNT value corresponding to data (PDCP PDU) triggering the reordering timer.

A first constant value (Maximum_PDCP_SN): is a constant value used by the LTE (E-UTRA) PDCP layer device and stores a value of 2^ (the length of PDCP serial numbers) - 1 as the constant value.

A second constant value (Reordering_Window or Window_Size): is a constant value used by the LTE(E-UTRA) PDCP layer device or an NR PDCP layer device and stores a value of 2^ (the length of PDCP serial numbers - 1) as the constant value.

Window parameter 2-1 (TX_NEXT): is a window parameter used by the NR PDCP layer device and indicates a COUNT value of next data (PDCP SDU), data (PDCP SDU) to be processed next, or data (PDPC SDU) to be transmitted next by the transmission PDCP layer device. When the PCDP layer device is established, an initial value of the window parameter is configured as 0.

Window parameter 2-2 ((RX_NEXT): is a window parameter used by the NR PDCP layer device and indicates a COUNT value expected to be received next by the reception PDCP layer device. When the PCDP layer device is established, an initial value of the window parameter is configured as 0.

Window parameter 2-3 (RX_DELIV): is a window parameter used by the NR PDCP layer device and indicates a COUNT value corresponding to the first data (PDCP SDU) which the reception PDCP layer device has not transferred to the higher-layer device. When the PCDP layer device is established, an initial value of the window parameter is configured as 0.

Window parameter 2-4 (RX_REORD): is a window parameter used by the NR PDCP layer device, and the window parameter may be used when the reception PDCP layer device performs the reordering function and indicates, stores, or has a COUNT value after a COUNT value corresponding to data (PDCP PDU) triggering the reordering timer.

The first PDCP layer device structure 611 or 612 proposed in FIG. 6 may have PDPC layer device structure (or function) 1-1, PDCP layer device structure (function) 1-2, or PDCP layer device structure (function) 1-3 proposed in the disclosure and have the following characteristics.
1> if the UE applies the first PDPC layer device structure and function 611 to the PDPC layer device (for example, the E-UTRA PDCP layer device or the LTE PDCP layer device) connected to the AM RLC layer device (for example, the E-UTRA AM RLC layer device) or does not use the reordering function (in PDCP layer device structure 1-1), the following procedure may be performed based on window parameter 1-2, window parameter 1-3, or the second constant value.
2> The reception PCPD layer device may first perform data detection outside the window or duplicated data detection for the received data based on window parameter 1-2, window parameter 1-3, or the second constant value (duplicated data or data outside the window may be received since the RLC AM has retransmission and the size of LTE RLC SNs and the size of PDCP SNs may be different from each other. The window indicates an area of the PDCP serial number or COUNT value in which effective data is received).
3> After performing a deciphering procedure and a header decompression procedure, the UE discards the data outside the window or the duplicated data based on window parameter 1-2, window parameter 1-3, or the second constant value (the data should be discarded after checking since useful information for the header decompression procedure (for example, IR packet or header compression information) can be inserted therein).
2> A PUSH window is operated based on window parameter 1-2, window parameter 1-3, or the second constant value, and the deciphering procedure and the header decompression procedure are directly performed for received data, which is not discarded, without reordering. This is because the E-UTRA AM RLC layer device sequentially arranges and then transfers the data to the PDCP layer device.
2> When the data is transferred to the higher-layer device, the data is transmitted in ascending order of COUNT values.
1> If the UE applies the first PDPC layer device structure and function 611 to the PDPC layer device (for example, the E-UTRA PDCP layer device or the LTE PDCP layer device) connected to the UM RLC layer device (for example, the E-UTRA UM RLC layer device) or does not use the reordering function (in PDCP layer device structure 1-2), the following procedure may be performed based on window parameter 1-2 or the second constant value.
2> A procedure of detecting data outside the window or detecting duplicated data may be not performed. This is because the UM E-UTRA RLC layer device has no retransmission procedure.
2> An HFN value or the COUNT value may be determined based on window parameter 1-2 or the second constant value, a PULL window procedure may be performed, the deciphering procedure may be directly performed for the received data, and the header decompression procedure may be performed.
2> The data may be directly transferred to the higher layer without the reordering procedure (for example, in ascending order).

PDCP layer device structure 1-1 or PDCP layer device structure 1-2 performs the operation of processing received data based on window parameter 1-2, window parameter 1-3, or the second constant value but does not apply the reordering function. PDCP layer device structure 1-3 may use the reordering function and perform the operation of processing received data based on not only window parameter 1-2, window parameter 1-3, or the second constant value but also window parameter 1-4. The second PDCP layer device structure may use the reordering function and perform the operation of processing received data based on window parameter 2-1, window parameter 2-2, window parameter 2-3, or window parameter 2-4.

When the out-of-sequence delivery function proposed in the disclosure is configured in the RLC layer device or when the RLC layer device is configured to set and perform the out-of-sequence delivery function (when the out-of-sequence delivery function configuration indicator is configured as a TRUE value), the PDCP layer device performing the reordering function may be configured or operated as follows in order to prevent data loss described in FIG. 7 or in order to prevent transmission of received data from the PDCP layer device to the higher-layer device (for example, the SDAP layer device or the application layer device) regardless of the order thereof.

In a method of operating the PDCP layer device proposed in the disclosure, the PDCP layer device may process received data through PDCP layer device 1-3 using the reordering function (E-UTRA PDCP layer device or LTE PDCP layer device) or the second PDCP layer device structure for the following cases. Specifically, the PDCP layer device may use or apply the reordering function for the case satisfying one of the following conditions and perform a procedure of processing received data in PDCP layer device structure 1-3 or the second PDCP layer device using the reordering function for data radio bearers (DRBs) connected to RLC layer devices using the RLC AM mode or RLC layer devices using the RLC UM mode or LWA bearers, or when a packet duplication technology is used.
the case in which the PDCP layer device is connected to two RLC layer devices,
the case in which the PDCP layer device is configured to an LTE wireless LAN aggregation (LWA) bearer,
the case in which the PDCP layer device was connected to two RLC layer devices in the RLC AM mode or was configured to the LWA bearer, and the PDCP layer device is connected to one RLC layer device in the RLC AM mode without any PDCP reestablishment procedure due to the most recent reconfiguration,
the case in which a packet duplication technology is configured in the PDCP layer device,
the case in which the PDCP layer device is connected to at least one RLC layer device in which the out-of-sequence delivery function is configured (or the out-of-sequence delivery configuration indicator of the RLC layer device is configured as a TRUE value),
the case in which the PDCP layer device is connected to one RLC layer device in the RLC AM mode or the RLC UM mode or two (or a plurality of) RLC layer devices in the RLC AM mode or the RLC UM mode in which the out-of-sequence delivery function is configured (or the out-of-sequence delivery function configuration indicator of the RLC layer device is configured as the TRUE value),
the case in which the PDCP layer device is configured for a DAPS bearer,
the case in which the PDCP layer device has been configured for the DAPS bearer and is not configured for the DAPS bearer after the most recent reconfiguration.

In the disclosure, when one of the above-described conditions is satisfied, a procedure of processing received data in PDCP layer device structure 1-3 (E-UTRA PDCP or LTE PDCP) using the reordering function proposed in the disclosure is described below.
1> the reordering procedure and the reordering timer may be always applied and the following procedure may be performed based on window parameter 1-2, window parameter 1-3, window parameter 1-4, or the first constant value (in PDCP layer device structure 1-3).
2> detection of data outside the window or detection of duplicated data may be first performed for data received based on window parameter 1-2, window parameter 1-3, window parameter 1-4, or the first constant value (this is because RLC AM retransmission may be performed or data may be received from different RLC layer devices at different time points, and sizes of LTE RLC SNs and PDCP SNs may be different from each other and thus data outside the window or duplicated data may be received).
3> a deciphering procedure is performed.
3> when an integrity protection or verification procedure is performed, the data is discarded after the procedure. If the integrity verification procedure fails, data (for example, PDCP SDU or PDCP PDU) is discarded and it may be reported to the higher-layer device. A header decompression procedure is not performed for data (for example, PDCP SDU or PDCP PDU) (because data satisfying conditions is data outside the window or duplicated data, which is not valid data).
3> data outside the window or duplicated data is discarded.
2> when a PUSH window operation is performed based on window parameter 1-2, window parameter 1-3, window parameter 1-4, or the first constant value and data is not discarded, a deciphering procedure may be immediately performed for received data without ordering. When the integrity protection or verification is configured, integrity verification is performed. When the integrity protection or verification procedure is performed, if the integrity verification procedure fails, data (for example, PDCP SDU or PDCP PDU) is discarded and it may be reported to the higher-layer device.
2> when ordering of the received data is performed and the data is sequentially successively arranged in ascending order without any gap between PDCP serial numbers or COUNT values, a header decompression procedure (robust header compression (ROHC), Ethernet header compression (EHC), or header decompression) may be performed and the data may be transferred to the higher layer in ascending order (when a header compression procedure or decompression procedure (ROHC or EHC) is configured).
2> if the reordering timer is running
3> if data corresponding to a COUNT value having a value which is the same as a value obtained by subtracting 1 from a value maintained by the parameter for reordering is transferred to the higher-layer device or if all the data is transferred to the higher layer since there is no gap between PDCP serial numbers (or COUNT values)
4> the reordering timer is stopped and reset
2> if the reordering time is not running
3> if there is data, which has not been transferred to the higher-layer device, in the buffer or if a gap is generated in PDCP serial numbers (or COUNT values)
4> the reordering timer starts
4> the parameter for recording is updated to a PDCP serial number or a COUNT value expected to be received next.
2> if the reordering timer expires
3> a header decompression procedure (robust header compression (ROHC), Ethernet header compression (EHC), or header decompression) may be performed for the stored data having values smaller than the reordering parameter value in ascending order of PDCP serial numbers or COUNT values and the data may be transferred to the higher layer (when a header compression procedure or decompression procedure (ROHC or EHC) is configured).
4> the stored data (PDCP SDUs) corresponds to data having PDCP serial numbers or COUNT values smaller than window parameter 1-4 (reordering parameter value).
4> the stored data (PDCP SDUs) corresponds to data having PDCP serial numbers or COUNT values, which are consecutively arranged in ascending order and larger than or equal to window parameter 1-4 (reordering parameter value).
3> the parameter value for data transferred to the higher layer is updated to the PDCP serial number or COUNT value of the last transmitted data.
3> if there is data, which has not been transferred to the higher-layer device, in the buffer or if a gap is generated in PDCP serial numbers (or COUNT values)
4> the reordering timer starts
4> the parameter for recording is updated to a PDCP serial number or a COUNT value expected to be received next.

A procedure of processing received data by the second PDCP layer device structure (NR PDCP layer device) having the reordering function proposed in the disclosure is described below. The NR RLC layer device connected to the NR PDCP layer device (or the second PDCP layer device structure) uses the out-of-sequence delivery function as the basic function rather than selectively configuring or not configuring the out-of-sequence delivery function, and thus the second PDCP layer device connected to the NR RLC layer device always uses the reordering function (PDCP reordering) as follows. For example, unlike the LTE RLC layer device, the NR RLC layer device may use only the out-of-sequence delivery function and does not use the in-sequence delivery function. In another method, when the LTE RLC layer device is connected to the second PDCP layer device, the out-of-sequence delivery function may be configured in the LTE RLC layer device.
1> the reordering procedure and the reordering time may be always applied to, for example, the NR PDCP layer device (if it is the second PDCP layer device structure), and the following procedure may be performed based on window parameter 2-2, window parameter 2-3, window parameter 2-4, or the first constant value.
2> a deciphering procedure may be first performed for the received data.
2> when an integrity protection or verification procedure is configured, the integrity protection or verification procedure may be performed for the received data and, if the integrity verification procedure fails, the data (for example, PDCP SDU or PDCP PDU) may be discarded and reported to the higher-layer device.
2> detection of data outside the window or detection of duplicated data is performed for the received data based on window parameter 2-2, window parameter 2-3, window parameter 2-4, or the first constant value (the detection of data outside the window or the duplication detection may be performed after the deciphering procedure. In another method, the detection of data outside the window or the duplication detection may be performed after the deciphering procedure only when the integrity protection or verification procedure is configured, and the deciphering procedure may be performed only for data, which has not been discarded, after the detection of data outside the window or the duplication detection is performed when the integrity protection or verification procedure is not configured).
3> data outside the window or duplicated data is discarded.
2> a PUSH window may be operated based on window parameter 2-2, window parameter 2-3, window parameter 2-4, or the first constant value, the ordering may be performed for the received data when the data is not discarded, a header decompression procedure (robust header compression (ROHC), Ethernet header compression (EHC), or header decompression) may be performed when the data is sequentially consecutively arranged in ascending order without any gap between PDCP serial numbers or COUNT values, and the data may be transferred to the higher layer (when a header compression procedure or decompression procedure (ROHC or EHC) is configured).
2> when the data is transferred to the higher-layer device, the data is transmitted in the ascending order of COUNT values.
2> if the reordering timer is running
3> if data corresponding to a COUNT value having a value which is the same as a value obtained by subtracting 1 from a value maintained by the parameter for reordering (for example, parameter window 2-4) is transferred to the higher-layer device, all the data is transferred to the higher layer without any gap between PDCP serial numbers (or COUNT values), or a value of the parameter storing the PDCP serial number or COUNT value of data to be transferred to the higher layer is larger than or equal to a value of the parameter for reordering (for example, window parameter 2-4)
4> the reordering timer is stopped and reset
2> if the reordering time is not running
3> if there is data, which has not been transferred to the higher-layer device and stored in the buffer, a gap is generated in the PDCP serial numbers (or COUNT values), or a value of the parameter storing a COUNT value of the first data, which has not been transferred to the higher layer, is smaller than a value of the parameter for reordering (for example, window parameter 2-4)

The parameter for reordering (for example, window parameter 2-4) is updated to a PDCP serial number or COUNT value expected to be received next.
4> the reordering timer starts
2> if the reordering timer expires
3> a header decompression procedure (robust header compression (ROHC), Ethernet header compression (EHC), or header decompression) may be performed for the stored data having values smaller than the reordering parameter value (for example, window parameter 2-4) in ascending order of PDCP serial numbers or COUNT values and the data may be transferred to the higher layer (when a header compression procedure or decompression procedure (ROHC or EHC) is configured).
3> when the header decompression procedure is configured for values larger than or equal to the recording parameter value (for example, window parameter 2-4) consecutively in ascending order of PDCP serial numbers or COUNT values, the header decompression procedure is performed and the data is transferred to the higher-layer device.
3> a parameter value for the first data, which has not been transferred to the higher layer, is updated to a PDCP serial number or a COUNT value of the first data which has not been transferred to the higher layer.
3> if there is data, which has not been transferred to the higher-layer device and stored in the buffer, a gap is generated in the PDCP serial numbers (or COUNT values), or a value of the parameter storing a COUNT value of the first data, which has not been transferred to the higher layer, is smaller than a value of the parameter for reordering (for example, window parameter 2-4)
4> the parameter for reordering (for example, window parameter 2-4) is updated to a PDCP serial number or COUNT value expected to be received next.
4> the reordering timer starts

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

Furthermore, an RLC entity as described herein may be replaced by any other entity performing the same function. As another example, a PDCP entity may be replaced by any other entity performing the same function. As still another example, a bearer may be replaced by any other entity performing the same function. For example, the disclosure is not limited by the terms "RLC entity" and "PDCP entity", and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by the terms and names defined in the 3GPP LTE standards, and may be applied in the same way to systems that conform other standards. For example, the disclosure may also be applied to 5G or 6G communication system for supporting a higher data transfer rate in the same way.

FIG. 7 illustrates a problem generated when an RLC layer device is connected to and configured in PDCP layer device structure 1-1 or PDCP layer device structure 1-2 and processes received data according to an embodiment of the disclosure.

Referring to FIG. 7, serial numbers illustrated in reference numeral 710 may be described based on PDCP serial numbers, and the PDCP serial numbers may have a mapping relationship with RLC serial numbers of each RLC layer device.

| Mapping relationship | Data 1 | Data 2 | Data 3 | Data 4 | Data 5 | Data 6 |
|---|---|---|---|---|---|---|
| PDCP serial number | 1 | 2 | 3 | 4 | 5 | 6 |
| RLC serial number (1g-11) | 1 | 2 | 3 | | | |
| RLC serial number (1g-12) | | | | 1 | 2 | 3 |

As indicated by reference numeral 710 of FIG. 7, two (or a plurality of) RLC layer devices 711 and 712 may be connected to one PDCP layer device, and, when a split bearer, an LWA bearer, or a packet duplication transmission technology is configured, respective RLC layer devices may receive different pieces of data or duplicated data at different time points. Further, even though the out-of-sequence delivery function is not configured, that is, even though each RLC layer device transfers data to the PDCP layer device in the order of RLC serial numbers, time points at which the PDCP layer device receives the data from the first RLC layer device 711 and the second RLC layer device 712 may be different. Accordingly, if the PDCP layer device is configured as PDCP layer device structure 1-1 or PDCP layer device structure 1-2 which does not perform the reordering function as indicated by reference numeral 710, the PDCP layer device does not perform the ordering and transfers data received from the lower-layer devices (RLC layer devices) to the higher-layer device regardless of the order, not in ascending order of PDCP serial numbers. In general, it is assumed that higher-layer device (for example, the application layer device (transmission control protocol/ internet protocol (TCP/IP) layer device) of the PDCP layer device sequentially receives data from the lower-layer device (PDCP layer device), and thus if the data is received out of sequence, it is considered as loss, determined as unnecessary retransmission or a radio connection problem, and a problem corresponding to a decrease in a data transmission rate occurs. Further, PDCP layer device structure 1-1 or PDCP layer device structure 1-2 does not perform the ordering based on the assumption that data is sequentially received from the RLC layer device, and thus if the RLC layer device is configured to have the out-of-sequence delivery function, a PDCP reception window moves too fast, data received late is considered as data outside the window, the data is discarded, and there is a possibility of data loss.

If the PDCP layer device is configured as PDCP layer device structure 1-1 or PDCP layer device structure 1-2 which does not perform the reordering function even when one RLC layer device is connected to one PDCP layer device and the out-of-sequence delivery function is configured in the RLC layer device as indicated by reference numeral 720 of FIG. 7, the PDCP layer device does not perform the ordering and transfer the data received from lower-layer devices (RLC layer devices) to the higher-layer device regardless of the order, that is, not in ascending order of PDCP serial numbers. In general, it is assumed that higher-layer device (for example, the application layer device (TCP/IP layer device) of the PDCP layer device sequentially receives data from the higher-layer device (PDCP layer device), and thus if the data is received out of sequence, it is considered as loss, determined as unnecessary retransmission or a radio connection problem, and a problem corresponding to a decrease in a data transmission rate occurs. Further, PDCP layer device structure 1-1 or PDCP layer device structure 1-2 does not perform the ordering based on the assumption that the data is sequentially received from the RLC layer device, and thus if the RLC layer device is configured to have the out-of-sequence delivery function, a PDCP reception window moves too fast, data received late is considered as data outside the window, the data is discarded, and data loss is generated.

The PDCP layer device should configure and apply PDCP layer device structure 1-3 (the E-UTRA PDCP layer device performing the reordering function) or the second PDCP layer device structure (the NR PDCP layer device performing the reordering function or the NR PDCP layer device determining that an application layer has an ordering function and configuring the out-of-sequence delivery function by the BS) in order to prevent a data loss problem of reducing a data transmission rate after considering loss and determining unnecessary retransmission making a request for retransmission or determining there is a radio connection problem when two (or a plurality of) RLC layer devices 711 and 712 are connected to one PDCP layer device and a split bearer, an LWA bearer, or a packet duplication technology is configured, when the out-of-sequence delivery function is configured for the RLC layer device, or one RLC layer device is connected to one PDCP layer device and the out-of-sequence delivery function is configured in the RLC layer device as indicated by reference numeral 710 or 720.

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

Furthermore, an RLC entity as described herein may be replaced by any other entity performing the same function. As another example, a PDCP entity may be replaced by any other entity performing the same function. As still another example, a bearer may be replaced by any other entity performing the same function. For example, the disclosure is not limited by the terms "RLC entity" and "PDCP entity", and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by the terms and names defined in the 3GPP LTE standards, and may be applied in the same way to systems that conform other standards. For example, the disclosure may also be applied to 5G or 6G communication system for supporting a higher data transfer rate in the same way.

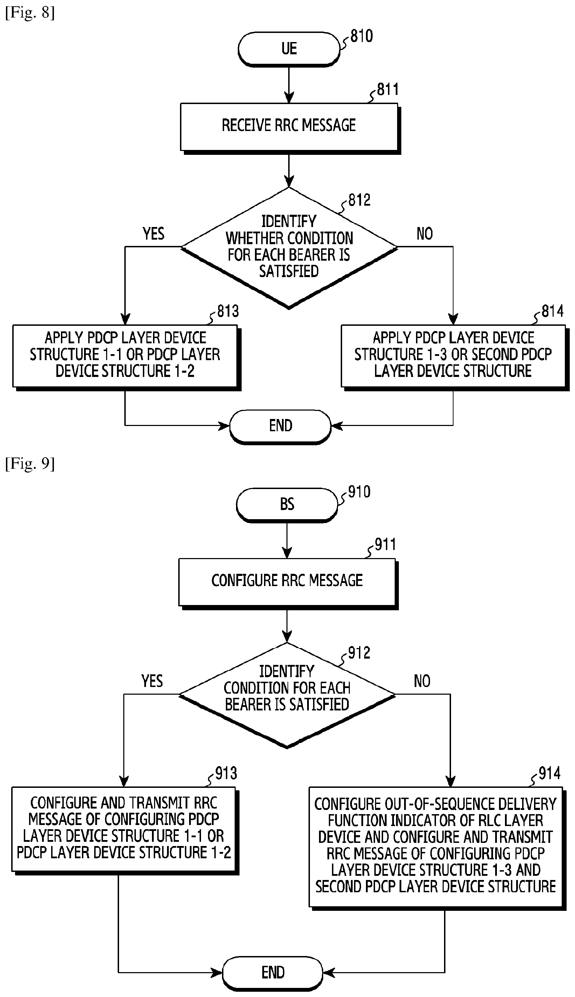

FIG. 8 illustrates an operation of a UE according to an embodiment of the disclosure.

Referring to FIG. 8, in the disclosure, when a UE 810 receives an RRC message from the BS in operation 811, the UE may identify configuration information of the RLC layer device, configuration information of the PDCP layer device, or configuration information of the bearer and identify whether one of the following conditions is satisfied in operation 812. For the following cases, PDCP layer device structure 1-3 or PDCP layer device 2 having the reordering function may be applied to the PDCP layer device, and received data may be processed. Specifically, for data radio bearers (DRBs) connected to RLC layer devices using the RLC AM mode or RLC layer devices using the RLC UM mode, for LWA bearers, when the packet duplication technology is used, or when the connection to the RLC layer device in which the out-of-sequence function is configured is made, the PDCP layer device may use or apply the reordering function to the following cases and perform the procedure of PDCP layer device structure 1-3 or the second PDCP layer device structure performing the reordering function in operation 814.

The case in which the PDCP layer device is connected to two RLC layer devices,

The case in which the PDCP layer device is configured for an LTE-wireless LAN aggregation (LWA) bearer,

The case in which the PDCP layer device is connected to two RLC layer devices in the RLC AM mode or is configured for the LWA bearer, and then is connected to one RLC layer device in the RLC AM mode without a PDCP reestablishment procedure due to the most recent reconfiguration,

The case in which a packet duplicate technology is configured in the PDCP layer device,

The case in which the PDCP layer device is connected to at least one RLC layer device in which an out-of-order delivery function is configured (or an out-of-order delivery function configuration indicator of the RLC layer device is configured as a TRUE value),

The case in which the PDCP layer device is connected to one RLC layer device in the RLC AM mode or the RLC UM mode or two (or a plurality of) RLA layer devices in the RLC AM mode or the RLC UM mode in which the out-of-order delivery function is configured (or the out-of-order delivery function configuration indicator of the RLC layer device is configured as a TRUE value),

The case in which the PDCP layer device is configured for a DAPS bearer,

The case in which the PDCP layer device is configured for the DAPS bearer and is not configured to the DAPS bearer after the most recent reconfiguration.

In the case that does not correspond to the cases, when the RLC AM mode for the first embodiment or the RLC UM mode for the second embodiment is configured in the received RRC message, PDCP layer device structure 1-1 corresponding to the RLC AM mode proposed in the disclosure or PDCP layer device structure 1-2 corresponding to the RLC UM mode may be applied to the PDCP layer device and received data may be processed in operation 813.

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

Furthermore, an RLC entity as described herein may be replaced by any other entity performing the same function. As another example, a PDCP entity may be replaced by any other entity performing the same function. As still another example, a bearer may be replaced by any other entity performing the same function. For example, the disclosure is not limited by the terms "RLC entity" and "PDCP entity", and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by these terms and names, and may be applied in the same way to systems that conform other standards. For example, the disclosure may also be applied to 5G or 6G communication system for supporting a higher data transfer rate in the same way.

FIG. 9 illustrates an operation of a BS according to an embodiment of the disclosure.

Referring to FIG. 9, when a BS 910 configures an RRC message to establish a bearer in the UE in operation 911, the BS may identify or determine bearer configuration information and configure and set configuration information of configuration information of the RLC layer device, an out-of-sequence delivery function of the RLC layer device, or configuration information of the PDCP layer device in operation 912.

When transmitting an RRC message (for example, an RRCReconfiguration message, an RRCSetup message, or an RRCResume message) to the UE, the BS may configure an indicator (for example, rlc-OutOfOrderDelivery) of configuring an out-of-sequence delivery function in RLC layer device configuration information (for example, rlf-config) of transmission resource configuration information (for example, Radio Resource Config Dedicated) included in the RRC message and configure the out-of-se3quence delivery function in an RLC layer device for each bearer of the UE (for example, the indicator is configured and a value thereof is configured as TRUE) or may not configure the same (for example, there is no indicator or the indicator is configured and the value thereof is configured as FALSE). The indicator of configuring the out-of-sequence delivery function (for example, rlc-OutOfOrderDelivery) may indicate transmission of data to a higher-layer device (for example, the PDCP layer device) regardless of the sequence or through an out-of-sequence delivery method when the RLC layer device corresponding to RLC layer device configuration information in which the indicator (for example, rlc-OutOfOrderDelivery) of configuring the out-of-sequence delivery function is configured transmits received data. The configuration of the indicator of configuring the out-of-sequence delivery function for the RLC layer device may be restricted in order to reduce UE implementation complexity when the RLC layer device connected to a bearer (or the PDCP layer device) in which the packet duplication technology is configured, a split bearer (split radio bearer (SRB or (DRB)), or an LWA bearer, or an NR PDCP layer device having the reordering function is configured or two (or a plurality of) RLC layer devices are configured in one PDCP layer device in operation 911. Accordingly, the BS may determine or identify whether to configure the packet duplication technology for each bearer, configure the split bearer, configure the LWA bearer, configure the NR PDCP layer device, or configure two (or a plurality of) RLC layer devices in one PDCP layer device. The RRC message may configured and transmitted such that the out-of-sequence delivery function is not configured in the LTE (E-UTRA) RLC layer device only when the RLC layer device connected to a bearer (or the PDCP layer device) in which the packet duplication technology is configured, a split bearer (split radio bearer (SRB or (DRB)), or an LWA bearer, or an NR PDCP layer device having the reordering function is configured or two (or a plurality of) RLC layer devices are configured in one PDCP layer device in operation 914. The RRC message may be configured and transmitted such that the out-of-sequence delivery function indicator of the RLC layer device is not configured in the RRC message, the RLC AM mode for the first embodiment or the RLC UM mode for the second embodiment is configured, and PDCP layer device structure 1-1 corresponding to the RLC AM mode proposed in the disclosure or PDCP layer device structure 1-2 corresponding to the RLC UM mode is applied to and configured in the PDCP layer device in operation 913. The Ethernet header compression function may be configured in the configuration information of the PDCP layer device in the RRC message or may be configured along with the out-of-sequence delivery function configured in the configuration information of the RLC layer device, thereby significantly reducing data transmission delay.

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

Furthermore, an RLC entity as described herein may be replaced by any other entity performing the same function. As another example, a PDCP entity may be replaced by any other entity performing the same function. As still another example, a bearer may be replaced by any other entity performing the same function. For example, the disclosure is not limited by the terms "RLC entity" and "PDCP entity", and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by the terms and names defined in the 3GPP LTE standards, and may be applied in the same way to systems that conform other standards. For example, the disclosure may also be applied to 5G or 6G communication system for supporting a higher data transfer rate in the same way.

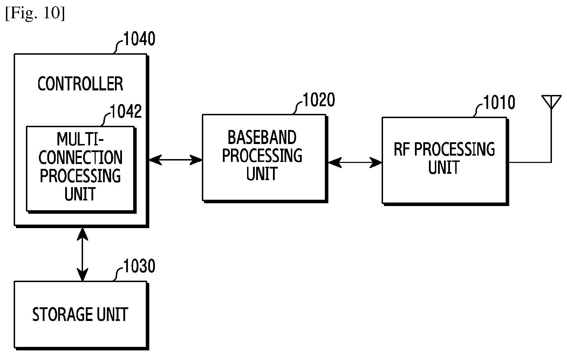

FIG. 10 illustrates a structure of a UE according to an embodiment of the disclosure.

Referring to FIG. 10, the UE includes a radio frequency (RF) processing unit 1010, a baseband processing unit 1020, a storage unit 1030, and a controller 1040.

The RF processing unit 1010 performs a function of transmitting and receiving a signal through a radio channel, such as converting or amplifying a band of the signal. For example, the RF processing unit 1010 up-converts a baseband signal provided from the baseband processing unit 1020 into an RF band signal, transmits the RF band signal through an antenna, and then down-converts the RF band signal received through the antenna into a baseband signal. For example, the RF processing unit 1010 may include a transmission filter, a reception filter, an amplifier, a mixer, an oscillator, a digital-to-analog converter (DAC), an analog-to-digital converter (ADC), and the like. Although FIG. 10 illustrates only one antenna, the UE may include a plurality of antennas. The RF processing unit 1010 may include a plurality of RF chains. Moreover, the RF processing unit 1010 may perform beamforming. For the beamforming, the RF processing unit 1010 may control a phase and a size of each signal transmitted/received through a plurality of antennas or antenna elements. The RF processing unit may perform MIMO and may receive a plurality of layers when the MIMO operation is performed. The RF processing unit 1010 may perform reception beam sweeping by appropriately configuring a plurality of antennas or antenna elements under the control of the controller or may control a direction of a reception beam and a beam width so that the reception beam corresponds to a transmission beam.

The baseband processing unit 1020 performs a function for conversion between a baseband signal and a bitstream according to a physical layer standard of the system. For example, in data transmission, the baseband processing unit 1020 generates complex symbols by encoding and modulating a transmission bitstream. Further, in data reception, the baseband processing unit 1020 reconstructs a reception bitstream by demodulating and decoding a baseband signal provided from the RF processing unit 1010. For example, in an orthogonal frequency division multiplexing (OFDM) scheme, when data is transmitted, the baseband processing unit 1020 generates complex symbols by encoding and modulating a transmission bitstream, maps the complex symbols to subcarriers, and then configures OFDM symbols through an inverse fast Fourier transform (IFFT) operation or a cyclic prefix (CP) insertion. Further, in data reception, the baseband processing unit 1020 divides the baseband signal provided from the RF processing unit 1010 in units of OFDM symbols, reconstructs the signals mapped to the subcarriers through a fast Fourier transform (FFT) operation, and then reconstructs a reception bitstream through demodulation and decoding.

The baseband processing unit 1020 and the RF processing unit 1010 transmit and receive signals as described above. Accordingly, the baseband processing unit 1020 and the RF processing unit 1010 may be referred to as a transmitter, a receiver, a transceiver, or a communication unit. Further, at least one of the baseband processing unit 1020 and the RF processing unit 1010 may include a plurality of communication modules to support a plurality of different radio access technologies. In addition, at least one of the baseband processing unit 1020 and the RF processing unit 1010 may include different communication modules to process signals in different frequency bands. For example, different radio access technologies may include an LTE network, an NR network, and the like. Further, the different frequency bands may include a super high frequency (SHF) (for example, 2.5 GHz and 5 Ghz) band and a millimeter (mm) wave (for example, 60 GHz) band.

The storage unit 1030 stores a basic program for the operation of the UE, an application program, and data, such as configuration information. The storage unit 1030 provides the stored data according to a request from the controller 1040.

The controller 1040 controls the overall operation of the UE and may include a multi-connection processing unit 1042. For example, the controller 1040 transmits and receives a signal through the baseband processing unit 1020 and the RF processing unit 1010. The controller 1040 records data in the storage unit 1030 and reads the same. To this end, the controller 1040 may include at least one processor. For example, the controller 1040 may include a communication processor (CP) that performs a control for communication, and an application processor (AP) that controls a higher layer, such as an application program.

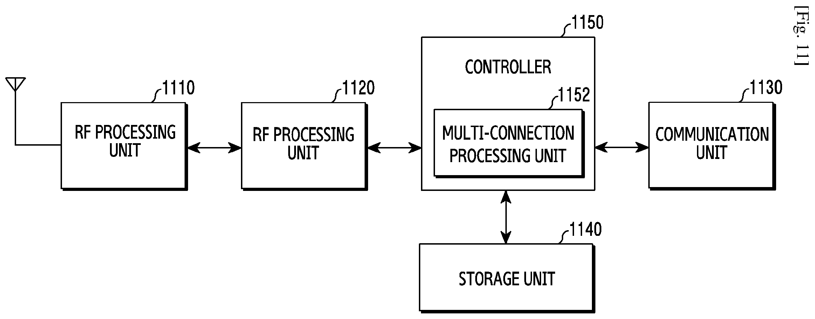

FIG. 11 is a block diagram illustrating a TRP in a wireless communication system according to an embodiment of the disclosure.

Referring to FIG. 11, the BS includes an RF processing unit 1110, a baseband processing unit 1120, a backhaul communication unit 1130, a storage unit 1140, and a controller 1150.

The RF processing unit 1110 performs a function of transmitting and receiving a signal through a radio channel, such as converting or amplifying a band of the signal. For example, the RF processing unit 1110 up-converts a baseband signal provided from the baseband processing unit 1120 into an RF band signal and then transmits the converted signal through an antenna, and down-converts an RF band signal received through the antenna into a baseband signal. For example, the RF processing unit 1110 may include a transmission filter, a reception filter, an amplifier, a mixer, an oscillator, a DAC, and an ADC. Although FIG. 11 illustrates only one antenna, a first access node may include a plurality of antennas. The RF processing unit 1110 may include a plurality of RF chains. The RF processing unit 1110 may perform beamforming. For the beamforming, the RF processing unit 1110 may control a phase and size of each of the signals transmitted and received through a plurality of antennas or antenna elements. The RF processing unit may perform a downlink MIMO operation by transmitting one or more layers.

The baseband processing unit 1120 performs a function of performing conversion between a baseband signal and a bitstream according to a physical-layer standard of the first radio access technology. For example, in data transmission, the baseband processing unit 1120 generates complex symbols by encoding and modulating a transmission bitstream. Further, in data reception, the baseband processing unit 1120 reconstructs a reception bitstream by demodulating and decoding a baseband signal provided from the RF processing unit 1110. For example, in an OFDM scheme, when data is transmitted, the baseband processing unit 1120 may generate complex symbols by encoding and modulating the transmission bitstream, map the complex symbols to subcarriers, and then configure OFDM symbols through an IFFT operation and CP insertion. In addition, when data is received, the baseband processing unit 1120 divides a baseband signal provided from the RF processing unit 1110 in units of OFDM symbols, reconstructs signals mapped with sub-carriers through an FFT operation, and then recovers a reception bitstream through demodulation and decoding. The baseband processing unit 1120 and the RF processing unit 1110 transmit and receive signals as described above. Accordingly, the baseband processing unit 1120 and the RF processing unit 1110 may be referred to as a transmitter, a receiver, a transceiver, a communication unit, or a wireless communication unit.

The communication unit 1130 provides an interface for performing communication with other nodes within the network.

The storage unit 1140 stores data, such as the basic program for the operation of the MeNB, an application program, and configuration information. Particularly, the storage unit 1140 may store information on bearers allocated to the accessed UE and measurement result reported by the accessed UE. Further, the storage unit 1140 may store information which is a reference for determining whether to provide multiple connections to the UE or stop the connections. The storage unit 1140 provides the stored data according to a request from the controller 1150.

The controller 1150 controls the overall operation of the MeNB and may include a multi-connection processing unit 1152. For example, the controller 1150 transmits and receives a signal through the baseband processing unit 1120 and the RF processing unit 1110 or the backhaul communication unit 1130. The controller 1150 records data in the storage unit 1140 and reads the same. To this end, the controller 1150 may include at least one processor.

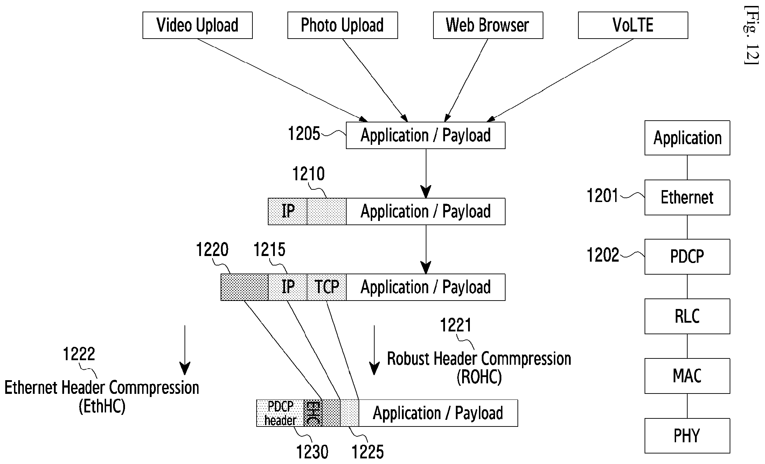

FIG. 12 illustrates an ethernet header compression (EthHC) method according to an embodiment of the disclosure.

Referring to FIG. 12, higher-layer data 1205 may be generated as data corresponding to services, such as video upload, photo upload, web browser, and VoLTE. Data generated by an application-layer device may be processed through a TCP/IP or a UDP corresponding to a network data transfer layer or processed through an Ethernet protocol 1201, respective headers 1210, 1215, and 1220 (higher-layer headers or Ethernet headers) may be configured, and the data may be transferred to the PDCP layer 1202. When receiving data (PDCP SDU) from the higher layer, the PDCP layer may perform the following procedure.

If the PDCP layer is configured to use a header compression (ROHC) or Ethernet header compression procedure by the RRC message in operation 510, 540, or 575 of FIG. 5, the PDCP layer device may compress the TCP/IP header by the ROHC as indicated by reference numeral 1221 and perform the Ether header compression procedure for the Ethernet header 1220 as indicated by reference numeral 1222. A field indicating whether to perform Ethernet header compression, a field indicating which fields of the Ethernet headers are compressed (omitted) or are not compressed (not omitted), or a separate header of Ethernet header compression (EHC) 1240 having a context identifier may be configured before compressed headers. If an integrity protection or verification procedure is configured, the integrity protection may be preformed for the PDCP header, the EHC header, the compressed headers, and data. Further, a ciphering procedure may be performed for the EHC header, the compressed headers, and data and the PDCP header 1230 may be configured to make a PDCP PDU through 1225. The PDCP layer device includes a header compression or decompression device, determines whether to perform header compression for each piece of data as configured in the RRC message, and uses the header compression or decompression device. When the transmission PDCP layer device compresses the Ethernet header or a higher-layer header (for example, the TCP/IP header) through the header compression device and integrity verification is configured, a transmitting side may perform integrity protection for the PDCP header, the EHC header, the compressed headers, and data. Further, a ciphering procedure may be performed for the EHC header, the compressed headers, and data and the PDCP header 1230 may be configured to make a PDCP PDU. On a receiving side, the reception PDCP layer device may perform a deciphering procedure for the EHC header, the compressed headers, and data. If the integrity protection or verification procedure is configured, the integrity verification may be preformed for the PDCP header, the EHC header, the compressed headers, and data. Header decompression is performed for the Ethernet header or the higher-layer header (for example, the TCP/IP header) through the header decompression device.

The described procedure of FIG. 12 may be applied to header compression of downlink data as well as uplink header compression by the UE. The description of the uplink data may be equally applied to downlink data.

The method of performing Ethernet header compression for the Ethernet header proposed in the disclosure is a method of omitting fields indicating or having fixed information and indicating only information, which has been changed or is to be changed, to reduce the header size. Accordingly, first, all header information and configuration information for compression (for example, an identifier (type) for each traffic (or service) for an Ethernet protocol, a serial number of each traffic (or service), information related to a compression rate, or an indicator indicating whether to perform compression) may be inserted and transmitted. Fields (for example, a sender address field or a receiver address field (MAC address), a preamble field, a start of frame delimiter (SFD), a frame checksum (FCS), or an Ethernet type field) corresponding to information which is not changed compared to all information first transmitted or fixed information may be omitted or not transmitted or only fields corresponding to changed information or information, which can be changed, may be inserted to configure the header, so as to reduce the header size. In another method, since fields which can be compressed and fields which cannot be compressed may be distinguished and values which are the same as values of fields of the fist transmitted complete header are continuously included as the values of the fields which can be compressed, only the field which can be compressed may be compressed (or omitted) and transmitted and the fields which cannot be compressed may be always transmitted without compression (or omission). Further, when at least one of the fields which can be compressed is changed from the values of the fields of the previously transmitted complete header, the complete header may be transmitted again. The reception PDCP layer device may always transmit feedback indicating that the complete header is successfully received to the transmission PDCP layer device whenever the complete header is received.

The disclosure proposes a method of not configuring an out-of-sequence delivery function (rlc-OutOfOrderDelivery) in an RLC layer device for a split bearer (for example, a PDCP layer device connected to at least two RLC layer devices), an LWA bearer, a bearer in which packet duplication is configured, or a bearer connected to at least one RLC layer device (for example, AM RLC or UM RLC layer device) in order to reduce implementation complexity of the UE. Further, the disclosure proposes that, when at least one RLC layer device in which the out-of-sequence delivery function (rlc-OutOfOrderDelivery) is configured is connected to the PDCP layer device, the PDCP layer device always performs a reordering function.

For example, in the case of a wireless communication system, a header compression protocol (ROHC or EHC) or an uplink data compression protocol (uplink data compression (UDC) may not be configured in the split bearer or the LWA bearer or the header compression protocol or the uplink data compression protocol may not be used for the split bearer or the LWA bearer (DRB) in order to reduce a possibility of generating a decompression error in data received from different RLC layer devices.

As proposed in the disclosure, when at least one RLC layer device in which the out-of-sequence delivery function (rlc-OutOfOrderDelivery) is configured is connected to the PDCP layer device, the PDCP layer device may perform the reordering function. However, when the header compression protocol (EHC or ROHC) is configured in the PDCP layer device, the header decompression error may be generated in handover.

For example, the reception PDCP layer device may use the reordering function like PDCP layer device structure 1-3 or the second PDCP layer device structure, use the out-of-sequence delivery function in the RLC layer device, and perform the header decompression procedure based on a first header compression context (ROHC context or EHC context) or protocol since the header compression procedure (ROHC or EHC) is configured therein. The PDCP layer device may non-sequentially receive data 1, data 2, data 4, and data 5 from the lower RLC layer device. For example, even though data 3 has not yet been received from the lower-layer device, data (for example, PDCP PDUs or RLC SDUs) may be received by the PDCP layer device. When PDCP layer device structure 1-3 or the second PDCP layer device performs the reordering procedure, the header decompression procedure is applied only to data in sequence and the data is transferred to the higher-layer device. However, data out of sequence is only stored in the buffer without the header decompression procedure, and the header decompression procedure is performed for the data (for example, PDCP SDUs or PDCP PDUs) only when all the data in sequence have been received.

When the UE receives an RRCReconfiguration message (or RRC Connection Reconfiguration) indicating handover (for example, through mobilityControlInfo or an indicator of ReconfiguratioWithSyn), the RRC message includes an indicator triggering a PDCP layer device reestablishment procedure, or an indicator (drb-ContinueROHC, drb-ContinueEHC-DL, or drb-ContinueEHC-UL) indicating the continuous use of the header compression protocol is not configured in the RRC message when the PDCP layer device reestablishment procedure is performed by reception of the RRC message, the UE may reset a first header compression protocol or context (EHC context, ROHC context, EHC protocol, or ROHC protocol) while performing the PDCP layer device reestablishment procedure in the PDCP layer device. Then, the UE may complete the handover procedure.

Since the first header compression protocol (or context) is reset, a second header compression protocol (or context) may be newly configured, and a target BS may receive data 3 after the handover is completed. Then, data 3, data 4, and data 5 are arranged sequentially, and thus the reception PDCP layer device perform the header decompression procedure for data (for example, PDCP SDUs, PDCP PDUs) 3, data 4, and data 5 through the second header compression protocol or context. Since data (for example, PDCP SDUs, PDCP PDUs) 4 and data 5 have been compressed through the first header compression protocol, a decompression failure error is generated if decompression is performed through the second header compression protocol.

Accordingly, in the disclosure, when PDCP layer device structure 1-3 or the second PDCP layer device structure uses the reordering function (t-reordering), the out-of-sequence delivery function is configured in the RLC layer device, or the indicator drb-ContinueROHC, drb-ContinueEHC-DL, or drb-ContinueEHC-UL) indicating the continuous use of the header compression protocol is not configured, if the PDCP layer device reestablishment procedure is performed, the reception PDCP layer device may first perform the header decompression procedure for stored data for the AM DRB. Then, when the indicator indicating the continuous use of the header compression protocol is not configured, the header compression protocol may be reset. When the reception PDCP layer device first performs the header decompression procedure for the stored data for the AM DRB, the header decompression is performed before the header compression protocol (or context) is reset, and thus the header decompression error may be prevented even through data in sequence arrives later because the header decompression protocol has been already performed.

Hereinafter, the disclosure proposes the performance of different procedures according to whether the reception PDCP layer device uses the reordering function for the AM DRB or the UM DRB or according to configuration information (for example, the indicator indicating the continuous use of the header compression protocol or the header compression function) configured by the RRC message if the PDCP layer device reestablishment procedure is performed for the case in which PDCP layer device structure 1-1 or PDCP layer device structure (or function) 1-2 does not use the reordering function, the case in which PDCP layer device structure 1-3 or the second PDCP layer device structure uses the reordering function (t-reordering), the case in which the out-of-sequence delivery function is configured in the RLC layer device, the case in which indicator (drb-ContinueROHC, drb-ContinueEHC-DL, or drb-ContinueEHC-UL) indicating the continuous use of the header compression protocol is not or is configured, or the case in which the Ethernet compression function is or is not configured.

Hereinafter, the disclosure proposes a first embodiment of a PDCP layer device reestablishment procedure for performing the proposed procedure in more detail.
1> if the UE receives an RRC message (for example, an RRCReconfiguration message) or an RRCReconfiguration message including a ReconfigurationWithSync indicator or a mobilityContorlInfo indicator
2> if the higher-layer device (for example, the RRC layer device) indicates or makes a request for a PDCP reestablishment procedure for the bearer or the PDCP layer device during a downlink data transmission procedure, the PDCP layer device performs the PDCP reestablishment procedure, the PDCP layer device operates as PDCP layer device structure 1-1, the bearer (DRB) is mapped to the RLC AM mode (or is connected to the RLC layer device operating in the RLC AM mode (acknowledge mode performing the ARQ operation)), or the reordering function is not used
3> the UE may process data (for example, PDCP PDU) received from the lower-layer device according to the procedure in which PDCP layer device structure 1-1 receives data due to the reestablishment procedure of the lower-layer device (for example, the RLC layer device).
3> except for the case in which the use of stored UE context (UE AS context) is indicated by the higher-layer device and an indicator (drb-ContinueROHC) indicating the continuous use of a header compression protocol (ROHC) is configured (for example, the case in which the RRC connection is resumed), the header compression protocol (ROHC protocol) for the downlink may be reset and started in no context (NC) state of a unidirectional (U) mode.
3> if when an indicator (drb-ContinueEHC-DL) indicating the continuous use of the header compression protocol (EHC) for the downlink is not configured, the header compression protocol (EHC protocol) for the downlink may be reset.
2> if the higher-layer device (for example, the RRC layer device) indicates or makes a request for a PDCP reestablishment procedure for the bearer or the PDCP layer device during a downlink data transmission procedure, the PDCP layer device performs the PDCP reestablishment procedure, the PDCP layer device uses the reordering function like PDCP layer device 1-3 (E-UTRA PDCP or LTE PDCP), or the bearer (DRB) is mapped to the RLC AM mode (or is connected to the RLC layer device operating in the RLC AM mode (acknowledge mode performing the ARQ operation))
3> the UE may process data (for example, PDCP PDU) received from the lower-layer device according to the procedure in which PDCP layer device structure 1-3 receives data due to the reestablishment procedure of the lower-layer device (for example, the RLC layer device).
3> if the PDCP layer device is to be connected to one AM RLC layer device after the PDCP reestablishment procedure
4> the reordering timer (t-Reordering) may be stopped and reset.
3> if the PDCP layer device is connected to at least one RLC layer device in which the out-of-sequence delivery indicator of the RLC layer device is configured
4> if the indicator (drb-ContinueEHC-DL) indicating the continuous use of the header compression protocol (EHC) is not configured for the downlink, the header decompression procedure may be performed for stored data (for example, PDCP SDUs) by using the header compression protocol (EHC). If the indicator (drb-ContinueEHC-DL) indicating the continuous use of the header compression protocol (EHC) is not configured for the downlink, the connection to the RLC layer device using the AM mode is made, and thus the Ethernet header decompression procedure may be applied to stored data and continuously stored without transmission to the higher-layer device in sequence to prevent data loss or wait for data which can be received later until the reordering timer expires. For example, when data is successively received later in ascending order of PDCP serial numbers or COUNT values without any break (or difference), the data may be transferred to the higher-layer device.
4> if when the indicator (drb-ContinueEHC-DL) indicating the continuous use of the header compression protocol (EHC) for the downlink is not configured, the header compression protocol (EHC protocol) for the downlink may be reset.
3> a ciphering algorithm or a security key provided from the higher-layer device may be applied while the reestablishment procedure is performed.
2> if the higher-layer device (for example, the RRC layer device) indicates or makes a request for a PDCP reestablishment procedure for the bearer or the PDCP layer device during a downlink data transmission procedure, the PDCP layer device performs the PDCP reestablishment procedure, the PDCP layer device operates as PDCP layer device structure 1-2, the bearer (DRB) is mapped to the RLC UM mode (or is connected to the RLC layer device operating in the RLC UM mode (unacknowledge mode which does not perform the ARQ operation)), or the reordering function is not used
3> the UE may process data (for example, PDCP PDU) received from the lower-layer device according to the procedure in which PDCP layer device structure 1-2 receives data due to the reestablishment procedure of the lower-layer device (for example, the RLC layer device).
3> if the ROHC protocol is configured for the bearer (DRB) (header compression function is configured) and the indicator (drb-ContinueROHC) indicating the continuous use of the header compression protocol (ROHC) is not configured, the header compression protocol (ROHC protocol) for the downlink may be reset and started in a no context (NC) state of a unidirectional (U) mode.
3> if when an indicator (drb-ContinueEHC-DL) indicating the continuous use of the header compression protocol (EHC) for the downlink is not configured, the header compression protocol (EHC protocol) for the downlink may be reset.
2> if the higher-layer device (for example, the RRC layer device) indicates or makes a request for a PDCP reestablishment procedure for the bearer or the PDCP layer device during a downlink data transmission procedure, the PDCP layer device performs the PDCP reestablishment procedure, the PDCP layer device uses the reordering function like PDCP layer device 1-3 (E-UTRA PDCP or LTE PDCP), or the bearer (DRB) is mapped to the RLC UM mode (or is connected to the RLC layer device operating in the RLC UM mode (unacknowledge mode which does not perform the ARQ operation))
3> the UE may process data (for example, PDCP PDU) received from the lower-layer device according to the procedure in which PDCP layer device structure 1-3 receives data due to the reestablishment procedure of the lower-layer device (for example, the RLC layer device).
3> if the reordering timer (t-Reordering) is running, the reordering timer may be stopped or reset. If the reordering timer (t-Reordering) is running, the connection to the RLC layer device using the UM mode is made, and thus the reordering timer may be stopped and reset in order to reduce a data transmission delay (or in order not to wait until the reordering timer expires).
3> if the PDCP layer device is connected to at least one RLC layer device in which the out-of-sequence delivery indicator of the RLC layer device is configured
4> if the Ethernet header compression function (or EHC) is configured or there is stored data, the Ethernet header decompression procedure (header decompression using EHC) may be performed for the stored data (all stored DPCP SDUs) and then the data (for example, PDCP SDUs) may be transferred to the higher-layer device in ascending order of COUNT values (associated COUNT values) allocated to the data (for example, PDC SDUs or PDCP PDUs). Since the connection to the RLC layer device using the UM mode is made, the reordering timer may be stopped and reset to reduce the data transmission delay , and a procedure of applying the Ethernet decompression procedure to the stored data and then directly transferring the data to the higher-layer device may be performed. For example, even though there is a gap (or difference) between PDCP serial numbers or COUNT values, the data may be transferred to the higher-layer device in ascending order regardless thereof.
4> if when the indicator (drb-ContinueEHC-DL) indicating the continuous use of the header compression protocol (EHC) for the downlink is not configured, the header compression protocol (EHC protocol) for the downlink may be reset.
3> otherwise or if the PDCP layer device is not connected to (at least one) RLC layer device in which the out-of-sequence delivery indicator of the RLC layer device is configured.
4> if there is stored data, the data (for example, PDCP SDUs) may be transferred to the higher-layer device in ascending order of COUNT values (associated COUNT values) allocated to the data (for example, PDCP SDUs or PDCP PDUs) for the stored data (all stored PDCP SDUs). When the PDCP layer device is not connected to (at least one) RLC layer device in which the out-of-sequence delivery indicator is configured, the Ethernet header compression function cannot be configured to reduce UE implementation complexity, and thus it is not required to perform the Ethernet header decompression procedure for the data (for example, PDCP SDUs or PDCP PDUs) as proposed in the disclosure. For example, the Ethernet header decompression procedure may not be performed for the data (for example, PDCP SDUs or PDCP PDUs) and may be transferred to the higher-layer device in ascending order.
3> a ciphering algorithm or a security key provided from the higher-layer device may be applied while the reestablishment procedure is performed.
2> if the higher-layer device (for example, the RRC layer device) indicates or makes a request for a PDCP reestablishment procedure for the bearer or the PDCP layer device during a downlink data transmission procedure, the PDCP layer device performs the PDCP reestablishment procedure, the PDCP layer device always uses the reordering function like the second PDCP layer device (NR PDCP), the bearer (DRB) is mapped to the RLC AM mode or the RLC UM mode (or is connected to the RLC layer device operating in the RLC AM mode or the RLC UM mode, or the RLC layer device always (or by default) uses the out-of-sequence delivery function
3> the UE may process data (for example, PDCP PDU) received from the lower-layer device according to the procedure in which the second PDCP layer device structure receives data due to the reestablishment procedure of the lower-layer device (for example, the RLC layer device).
3> if the bearer is a UM DRB (or the bearer is connected to the UM RLC layer device)
3> if the reordering timer (t-reordering) is running
5> the reordering timer may be stopped or reset.
5> the header decompression procedure (for example, the EHC or ROHC header decompression procedure) may be performed for the stored data for the UM DRB, and then data (for example, PDCP SDUs) may be transferred to the higher-layer device in ascending order of COUNT values (associated COUNT values) allocated to the data (for example, PDCP SDUs or PDCP PDUs).
3> if the bearer is an AM DRB (or the bearer is connected to the AM RLC layer device) or, for the AM DRB
4> if the indicator (drb-ContinueROHC) indicating the continuous use of the header compression protocol (ROHC) is not configured for the downlink, the header decompression procedure may be performed for stored data (for example, PDCP SDUs) by using the header compression protocol (ROHC).
4> if the indicator (drb-ContinueEHC-DL) indicating the continuous use of the header compression protocol (EHC) is not configured for the downlink, the header decompression procedure may be performed for stored data (for example, PDCP SDUs) by using the header compression protocol (EHC).
3> if the indicator (drb-ContinueROHC) indicating the continuous use of the header compression protocol (ROHC) is not configured for the AM DRB or the UM DRB, the header compression protocol (ROHC protocol) for the downlink may be reset and started in a no context (NC) state of a unidirectional (U) mode.
3> if when an indicator (drb-ContinueEHC-DL) indicating the continuous use of the header compression protocol (EHC) for the AM DRB or the UM DRB is not configured, the header compression protocol (EHC protocol) for the downlink may be reset.
3> a ciphering algorithm or a security key provided from the higher-layer device may be applied while the reestablishment procedure is performed.

Hereinafter, the disclosure proposes a second embodiment of a PDCP layer device reestablishment procedure for performing the proposed procedure in more detail.
1> if the UE receives an RRC message (for example, an RRCReconfiguration message) or an RRCReconfiguration message including a ReconfigurationWithSync indicator or a mobilityContorlInfo indicator
2> if the higher-layer device (for example, the RRC layer device) indicates or makes a request for a PDCP reestablishment procedure for the bearer or the PDCP layer device during a downlink data transmission procedure, the PDCP layer device performs the PDCP reestablishment procedure, the PDCP layer device operates as PDCP layer device structure 1-1, the bearer (DRB) is mapped to the RLC AM mode (or is connected to the RLC layer device operating in the RLC AM mode (acknowledge mode performing the ARQ operation)), or the reordering function is not used
3> the UE may process data (for example, PDCP PDU) received from the lower-layer device according to the procedure in which PDCP layer device structure 1-1 receives data due to the reestablishment procedure of the lower-layer device (for example, the RLC layer device).
3> except for the case in which the use of stored UE context (UE AS context) is indicated by the higher-layer device and an indicator (drb-ContinueROHC) indicating the continuous use of a header compression protocol (ROHC) is configured (for example, the case in which the RRC connection is resumed), the header compression protocol (ROHC protocol) for the downlink may be reset and started in no context (NC) state of a unidirectional (U) mode.
3> if when an indicator (drb-ContinueEHC-DL) indicating the continuous use of the header compression protocol (EHC) for the downlink is not configured, the header compression protocol (EHC protocol) for the downlink may be reset.
2> if the higher-layer device (for example, the RRC layer device) indicates or makes a request for a PDCP reestablishment procedure for the bearer or the PDCP layer device during a downlink data transmission procedure, the PDCP layer device performs the PDCP reestablishment procedure, the PDCP layer device uses the reordering function like PDCP layer device 1-3 (E-UTRA PDCP or LTE PDCP), or the bearer (DRB) is mapped to the RLC AM mode (or is connected to the RLC layer device operating in the RLC AM mode (acknowledge mode performing the ARQ operation))
3> the UE may process data (for example, PDCP PDU) received from the lower-layer device according to the procedure in which PDCP layer device structure 1-3 receives data due to the reestablishment procedure of the lower-layer device (for example, the RLC layer device).
3> if the PDCP layer device is to be connected to one AM RLC layer device after the PDCP reestablishment procedure
4> the reordering timer (t-Reordering) may be stopped and reset.
3> if the PDCP layer device is connected to at least one RLC layer device in which the out-of-sequence delivery indicator of the RLC layer device is configured
4> if the indicator (drb-ContinueEHC-DL) indicating the continuous use of the header compression protocol (EHC) is not configured for the downlink, the header decompression procedure may be performed for stored data (for example, PDCP SDUs) by using the header compression protocol (EHC). If the indicator (drb-ContinueEHC-DL) indicating the continuous use of the header compression protocol (EHC) is not configured for the downlink, the connection to the RLC layer device using the AM mode is made, and thus the Ethernet header decompression procedure may be applied to stored data and continuously stored without transmission to the higher-layer device in order to prevent data loss or wait for data which can be received later until the reordering timer expires. For example, when data is successively received later in ascending order of PDCP serial numbers or COUNT values without any break (or difference), the data may be transferred to the higher-layer device.
4> if when the indicator (drb-ContinueEHC-DL) indicating the continuous use of the header compression protocol (EHC) for the downlink is not configured, the header compression protocol (EHC protocol) for the downlink may be reset.
3> a ciphering algorithm or a security key provided from the higher-layer device may be applied while the reestablishment procedure is performed.
2> if the higher-layer device (for example, the RRC layer device) indicates or makes a request for a PDCP reestablishment procedure for the bearer or the PDCP layer device during a downlink data transmission procedure, the PDCP layer device performs the PDCP reestablishment procedure, the PDCP layer device operates as PDCP layer device structure 1-2, the bearer (DRB) is mapped to the RLC UM mode (or is connected to the RLC layer device operating in the RLC UM mode (unacknowledge mode which does not perform the ARQ operation)), or the reordering function is not used
3> the UE may process data (for example, PDCP PDU) received from the lower-layer device according to the procedure in which PDCP layer device structure 1-2 receives data due to the reestablishment procedure of the lower-layer device (for example, the RLC layer device).
3> if the ROHC protocol is configured for the bearer (DRB) (header compression function is configured) and the indicator (drb-ContinueROHC) indicating the continuous use of the header compression protocol (ROHC) is not configured, the header compression protocol (ROHC protocol) for the downlink may be reset and started in a no context (NC) state of a unidirectional (U) mode.
3> if when an indicator (drb-ContinueEHC-DL) indicating the continuous use of the header compression protocol (EHC) for the downlink is not configured, the header compression protocol (EHC protocol) for the downlink may be reset.
2> if the higher-layer device (for example, the RRC layer device) indicates or makes a request for a PDCP reestablishment procedure for the bearer or the PDCP layer device during a downlink data transmission procedure, the PDCP layer device performs the PDCP reestablishment procedure, the PDCP layer device uses the reordering function like PDCP layer device 1-3 (E-UTRA PDCP or LTE PDCP), or the bearer (DRB) is mapped to the RLC UM mode (or is connected to the RLC layer device operating in the RLC UM mode (acknowledge mode in which the ARQ operation is not performed))
3> the UE may process data (for example, PDCP PDU) received from the lower-layer device according to the procedure in which PDCP layer device structure 1-3 receives data due to the reestablishment procedure of the lower-layer device (for example, the RLC layer device).
3> if the reordering timer (t-Reordering) is running, the reordering timer may be stopped or reset. If the reordering timer (t-Reordering) is running, the connection to the RLC layer device using the UM mode is made, and thus the reordering timer may be stopped and reset in order to reduce a data transmission delay (or in order not to wait until the reordering timer expires).
4> if the Ethernet header compression function (or EHC) is configured or there is stored data, the Ethernet header decompression procedure (header decompression using EHC) may be performed for the stored data (all stored DPCP SDUs) and then the data (for example, PDCP SDUs) may be transferred to the higher-layer device in ascending order of COUNT values (associated COUNT values) allocated to the data (for example, PDCP SDUs or PDCP PDUs). If the Ethernet header compression function (or EHC) is configured or there is stored data, the connection to the RLC layer device using the UM mode is made, and thus the reordering timer may be stopped and reset to reduce the data transmission delay, and a procedure of applying the Ethernet decompression procedure to the stored data and then directly transferring the data to the higher-layer device may be performed. For example, even though there is a gap (or difference) between PDCP serial numbers or COUNT values, the data may be transferred to the higher-layer device in ascending order regardless thereof. However, if there is stored data when the Ethernet header compression function is not configured, the data (for example, PDCP SDUs) may be transferred to the higher-layer device in ascending order of COUNT values (associated COUNT values) allocated to the data (for example, PDCP SDUs or PDCP PDUs) for the stored data (all stored PDCP SDUs). For example, when the PDCP layer device is not connected to (at least one) RLC layer device in which the out-of-sequence delivery indicator is configured, the Ethernet header compression function cannot be configured to reduce UE implementation complexity, and thus it is not required to perform the Ethernet header decompression procedure for the data (for example, PDCP SDUs or PDCP PDUs) as proposed in the disclosure. For example, the Ethernet header decompression procedure may not be performed for the data (for example, PDCP SDUs or PDCP PDUs) and transferred to the higher-layer device in ascending order.
3> if the PDCP layer device is connected to at least one RLC layer device in which the out-of-sequence delivery indicator of the RLC layer device is configured
4> if when the indicator (drb-ContinueEHC-DL) indicating the continuous use of the header compression protocol (EHC) for the downlink is not configured, the header compression protocol (EHC protocol) for the downlink may be reset.
3> a ciphering algorithm or a security key provided from the higher-layer device may be applied while the reestablishment procedure is performed.
2> if the higher-layer device (for example, the RRC layer device) indicates or makes a request for a PDCP reestablishment procedure for the bearer or the PDCP layer device during a downlink data transmission procedure, the PDCP layer device performs the PDCP reestablishment procedure, the PDCP layer device always uses the reordering function like the second PDCP layer device (NR PDCP), the bearer (DRB) is mapped to the RLC AM mode or the RLC UM mode (or is connected to the RLC layer device operating in the RLC AM mode or the RLC UM mode, or the RLC layer device always (or by default) uses the out-of-sequence delivery function
3> the UE may process data (for example, PDCP PDU) received from the lower-layer device according to the procedure in which the second PDCP layer device structure receives data due to the reestablishment procedure of the lower-layer device (for example, the RLC layer device).
3> if the bearer is a UM DRB (or the bearer is connected to the UM RLC layer device)
4> if the reordering timer (t-reordering) is running
5> the reordering timer may be stopped or reset.
5> the header decompression procedure (for example, the EHC or ROHC header decompression procedure) may be performed for the stored data (all stored PDCP SDUs) for the UM DRB, and then data (for example, PDCP SDUs) may be transferred to the higher-layer device in ascending order of COUNT values (associated COUNT values) allocated to the data (for example, PDCP SDUs or PDCP PDUs).
3> if the bearer is an AM DRB (or the bearer is connected to the AM RLC layer device) or, for the AM DRB
4> if the indicator (drb-ContinueROHC) indicating the continuous use of the header compression protocol (ROHC) is not configured for the downlink, the header decompression procedure may be performed for stored data (for example, PDCP SDUs) by using the header compression protocol (ROHC).
4> if the indicator (drb-ContinueEHC-DL) indicating the continuous use of the header compression protocol (EHC) is not configured for the downlink, the header decompression procedure may be performed for stored data (for example, PDCP SDUs) by using the header compression protocol (EHC).
3> if the indicator (drb-ContinueROHC) indicating the continuous use of the header compression protocol (ROHC) is not configured for the AM DRB or the UM DRB, the header compression protocol (ROHC protocol) for the downlink may be reset and started in a no context (NC) state of a unidirectional (U) mode.
3> if when an indicator (drb-ContinueEHC-DL) indicating the continuous use of the header compression protocol (EHC) for the AM DRB or the UM DRB is not configured, the header compression protocol (EHC protocol) for the downlink may be reset.
3> a ciphering algorithm or a security key provided from the higher-layer device may be applied while the reestablishment procedure is performed.

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

Furthermore, an RLC entity as described herein may be replaced by any other entity performing the same function. As another example, a PDCP entity may be replaced by any other entity performing the same function. As still another example, a bearer may be replaced by any other entity performing the same function. For example, the disclosure is not limited by the terms "RLC entity" and "PDCP entity", and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by these terms and names, and may be applied in the same way to systems that conform other standards. For example, the disclosure may also be applied to 5G or 6G communication system for supporting a higher data transfer rate in the same way.

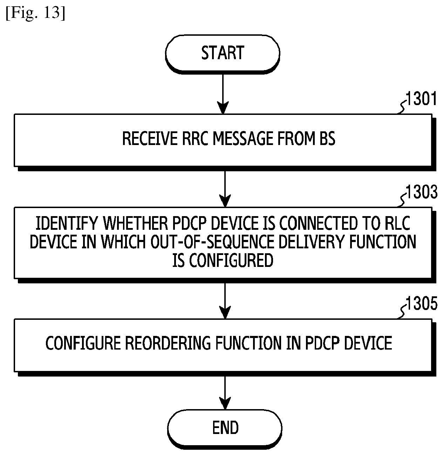

FIG. 13 is a flowchart illustrating an operation according to an embodiment of the disclosure.

Referring to FIG. 13, in operation 1301, the UE may receive a radio resource control (RRC) message from the BS. Radio link control (RLC) device (entity) configuration information, packet data convergence protocol (PDCP) device configuration information, and bearer configuration information may be included.

Thereafter, in operation 1303, the UE may identify whether the PDCP device is connected to an RLC device in which an out-of-sequence delivery function (rlc-OutOfOrderDelivery) is configured based on the RRC message. The RLC device in which the out-of-sequence delivery function (rlc-OutOfOrderDelivery) is configured, connected to the PDCP device may be at least one of an RLC acknowledged mode (AM) mode RLC device or an RLC unacknowledged mode (UM) mode RLC device.

In operation 1305, the UE may include an operation of configuring a reordering function in the PDCP device. Specifically, the UE may configure the reordering function in the PDCP device based on whether the PDCP device is connected to the RLC device in which the out-of-sequence delivery function (rlc-OutOfOrderDelivery) is configured.

In the description, terms for identifying access nodes, terms referring to network entities, terms referring to messages, terms referring to interfaces between network entities, terms referring to various identification information, and the like have been illustratively used for the convenience of description. Therefore, the disclosure is not limited by the terms as used below, and other terms referring to subjects having equivalent technical meanings may be used.

Furthermore, an RLC entity as described herein may be replaced by any other entity performing the same function. As another example, a PDCP entity may be replaced by any other entity performing the same function. As still another example, a bearer may be replaced by any other entity performing the same function. For example, the disclosure is not limited by the terms "RLC entity" and "PDCP entity", and other terms referring to subjects having equivalent technical meanings may be used.

For the convenience of description, the disclosure has been described using terms and names defined in the 3rd generation partnership project long term evolution (3GPP LTE) standards for the convenience of description. However, the disclosure is not limited by the terms and names defined in the 3GPP LTE standards, and may be applied in the same way to systems that conform other standards. For example, the disclosure may also be applied to 5G or 6G communication system for supporting a higher data transfer rate in the same way.

According to the disclosure, a method performed by a UE in a wireless communication system may include an operation of receiving a radio resource control (RRC) message from a BS, the RRC message including radio link control (RLC) device (entity) configuration information, packet data convergence protocol (PDCP) device configuration information, and bearer configuration information, an operation of identifying whether a PDCP device is connected to an RLC device in which an out-of-sequence delivery function (rlc-OutOfOrderDelivery) is configured based on the RRC message, and an operation of configuring a reordering function in the PDCP device based on whether the PDCP device is connected to the RLC device, wherein the RLC device may be at least one device of an RLC acknowledged mode (AM) RLC device or an RLC unacknowledged mode (UM) mode RLC device.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks, such as the Internet, Intranet, local area network (LAN), wide LAN (WLAN), and storage area network (SAN) or a combination thereof. Such a storage device may access the electronic device via an external port. Further, a separate storage device on the communication network may access a portable electronic device.

While the disclosure has been shown and described with reference to various embodiments thereof, it will be understood by those skilled in the art that various changes in form and details may be made therein without departing from the scope of the disclosure as defined by the appended claims.

## Claims

1. A method performed by a user equipment, UE, in a wireless communication system, the method comprising:
receiving, from an upper layer, a request for a packet data convergence protocol, PDCP, re-establishment of a PDCP entity, if a reordering function is used for the PDCP entity;
processing a PDCP protocol data unit, PDU, received from a lower layer according to a re-establishment of the lower layer;
stopping and resetting a reordering timer, if the reordering timer is running; performing a header decompression for all stored PDCP service data units, SDUs, using an ethernet header compression, EHC, configured for the PDCP entity; and
delivering all header decompressed PDCP SDUs to the upper layer in ascending order of associated count values,
wherein a data radio bearer, DRB, including the PDCP entity is mapped on radio link control, RLC, entity of an unacknowledged mode, UM.

2. The method of claim 1, wherein the request for the PDCP re-establishment is based on a radio resource control, RRC, message including a mobility control information indication.

3. The method of claim 1, further comprising:
if the PDCP entity is associated with at least one RLC entity configured with out-of- order delivery and an indicator indicating a continuous use of the EHC for a downlink is not configured, resetting the EHC for the downlink.

4. The method of claim 3, further comprising:
setting a next PDCP reception sequence number variable and a reception hyper frame number variable to 0; and
setting a last submitted PDCP reception sequence number variable to a maximum PDCP sequence number .

5. The method of claim 4, further comprising:
applying a ciphering algorithm and a key provided by the upper layer during the PDCP re-establishment.

6. The method of claim 1, wherein the header decompression is performed for the all stored PDCP SDUs using the EHC configured for the PDCP entity, after performing a deciphering.

7. A user equipment, UE, in a wireless communication system, the UE comprising:
at least one transceiver;
at least one processor communicatively coupled to the at least one transceiver; and
at least one memory, communicatively coupled to the at least one processor, storing instructions executable by the at least one processor individually or in any combination to cause the UE to:
receive, from an upper layer, a request for a packet data convergence protocol, PDCP, re-establishment of a PDCP entity, if a reordering function is used for the PDCP entity,
process a PDCP protocol data unit, PDU, received from a lower layer according to a re-establishment of the lower layer,
stop and reset a reordering timer, if the reordering timer is running,
perform a header decompression for all stored PDCP service data units, SDUs, using an ethernet header compression, EHC, configured for the PDCP entity, and
deliver all header decompressed PDCP SDUs to the upper layer in ascending order of associated count values,
wherein a data radio bearer, DRB, including the PDCP entity is mapped on a radio link control, RLC, entity of an unacknowledged mode, UM.

8. The UE of claim 7, wherein the request for the PDCP re-establishment is based on a radio resource control, RRC, message including a mobility control information indication.

9. The UE of claim 7, wherein the at least one processor is further configured to:
if the PDCP entity is associated with at least one RLC entity configured with out-of- order delivery and an indicator indicating a continuous use of the EHC for a downlink is not configured, reset the EHC for the downlink.

10. The UE of claim 9, wherein the at least one processor is further configured to:
set a next PDCP reception sequence number variable and a reception hyper frame number variable to 0, and
set a last submitted PDCP reception sequence number variable to a maximum PDCP sequence number .

11. The UE of claim 10, wherein the at least one processor is further configured to:
apply a ciphering algorithm and a key provided by the upper layer during the PDCP re-establishment.

## Patentansprüche

1. Verfahren, durchgeführt durch ein Benutzergerät, UE, in einem Drahtloskommunikationssystem, wobei das Verfahren Folgendes umfasst:
Empfangen, von einer oberen Schicht, einer Anforderung für eine Paketdatenkonvergenzprotokoll-, PDCP-Wiederherstellung einer PDCP-Entität, wenn eine Neuordnungsfunktion für die PDCP-Entität verwendet wird;
Verarbeiten einer PDCP-Protokolldateneinheit, PDU, die von einer unteren Schicht empfangen wird, gemäß einer Wiederherstellung der unteren Schicht;
Anhalten und Zurücksetzen eines Neuordnungszeitgebers, wenn der Neuordnungszeitgeber läuft;
Durchführen einer Header-Dekomprimierung für alle gespeicherten PDCP-Dienstdateneinheiten, SDUs, unter Verwendung einer Ethernet-Header-Komprimierung, EHC, die für die PDCP-Entität konfiguriert ist; und
Liefern von allen Header-dekomprimierten PDCP-SDUs an die obere Schicht in aufsteigender Reihenfolge von assoziierten Zählwerten,
wobei ein Datenfunkträger, DRB, der die PDCP-Entität beinhaltet, auf eine Funkstreckensteuer-, RLC-Entität eines unbestätigten Modus, UM, abgebildet ist.

2. Verfahren nach Anspruch 1, wobei die Anforderung für die PDCP-Wiederherstellung auf einer Funkressourcensteuer-, RRC-Nachricht basiert, die eine Mobilitätssteuerinformationsangabe beinhaltet.

3. Verfahren nach Anspruch 1, ferner umfassend:
wenn die PDCP-Entität mit zumindest einer RLC-Entität assoziiert ist, die mit Out-of-Order-Lieferung konfiguriert ist, und ein Indikator, der eine kontinuierliche Verwendung der EHC für einen Downlink angibt, nicht konfiguriert ist, Zurücksetzen der EHC für den Downlink.

4. Verfahren nach Anspruch 3, ferner umfassend:
Setzen einer nächsten PDCP-Empfangssequenznummervariablen und einer Empfangshyperrahmennummervariablen auf 0; und
Setzen einer zuletzt übermittelten PDCP-Empfangssequenznummervariablen auf eine maximale PDCP-Sequenznummer.

5. Verfahren nach Anspruch 4, ferner umfassend:
Anwenden eines Verschlüsselungsalgorithmus und eines Schlüssels, der durch die obere Schicht während der PDCP-Wiederherstellung bereitgestellt ist.

6. Verfahren nach Anspruch 1, wobei die Header-Dekomprimierung für alle gespeicherten PDCP-SDUs unter Verwendung der EHC durchgeführt wird, die für die PDCP-Entität konfiguriert ist, nachdem eine Entschlüsselung durchgeführt ist.

7. Benutzergerät, UE, in einem Drahtloskommunikationssystem, wobei das UE Folgendes umfasst:
zumindest einen Sendeempfänger;
zumindest einen Prozessor, der kommunikativ an den zumindest einen Sendeempfänger gekoppelt ist; und
zumindest einen Speicher, der kommunikativ an den zumindest einen Prozessor gekoppelt ist, der Anweisungen speichert, die durch den zumindest einen Prozessor einzeln oder in einer beliebigen Kombination ausführbar sind, um das UE zu Folgendem zu veranlassen:
Empfangen, von einer oberen Schicht, einer Anforderung für eine Paketdatenkonvergenzprotokoll-, PDCP-Wiederherstellung einer PDCP-Entität, wenn eine Neuordnungsfunktion für die PDCP-Entität verwendet wird,
Verarbeiten einer PDCP-Protokolldateneinheit, PDU, die von einer unteren Schicht empfangen wird, gemäß einer Wiederherstellung der unteren Schicht,
Stoppen und Zurücksetzen eines Neuordnungszeitgebers, wenn der Neuordnungszeitgeber läuft,
Durchführen einer Header-Dekomprimierung für alle gespeicherten PDCP-Dienstdateneinheiten, SDUs, unter Verwendung einer Ethernet-Header-Komprimierung, EHC, die für die PDCP-Entität konfiguriert ist, und
Liefern von allen Header-dekomprimierten PDCP-SDUs an die obere Schicht in aufsteigender Reihenfolge von assoziierten Zählwerten,
wobei ein Datenfunkträger, DRB, der die PDCP-Entität beinhaltet, auf eine Funkstreckensteuer-, RLC-Entität eines unbestätigten Modus, UM, abgebildet ist.

8. UE nach Anspruch 7, wobei die Anforderung für die PDCP-Wiederherstellung auf einer Funkressourcensteuer-, RRC-Nachricht basiert, die eine Mobilitätssteuerinformationsangabe beinhaltet.

9. UE nach Anspruch 7, wobei der zumindest eine Prozessor ferner zu Folgendem konfiguriert ist:
wenn die PDCP-Entität mit zumindest einer RLC-Entität assoziiert ist, die mit einer Out-of-Order-Lieferung konfiguriert ist, und ein Indikator, der eine kontinuierliche Verwendung der EHC für einen Downlink angibt, nicht konfiguriert ist, Zurücksetzen der EHC für den Downlink.

10. UE nach Anspruch 9, wobei der zumindest eine Prozessor ferner zu Folgendem konfiguriert ist:
Setzen einer nächsten PDCP-Empfangssequenznummernvariablen und einer Empfangshyperrahmennummernvariablen auf 0, und
Setzen einer zuletzt übermittelten PDCP-Empfangssequenznummervariablen auf eine maximale PDCP-Sequenznummer.

11. UE nach Anspruch 10, wobei der zumindest eine Prozessor ferner zu Folgendem konfiguriert ist:
Anwenden eines Verschlüsselungsalgorithmus und eines Schlüssels, der durch die obere Schicht während der PDCP-Wiederherstellung bereitgestellt ist.

## Revendications

1. Procédé réalisé par un équipement utilisateur, UE, dans un système de communication sans fil, le procédé comprenant :
la réception, à partir d'une couche supérieure, d'une demande de rétablissement d'un protocole de convergence de données par paquets, PDCP, d'une entité PDCP, si une fonction de réorganisation est utilisée pour l'entité PDCP ;
le traitement d'une unité de données de protocole PDCP, PDU, reçue à partir d'une couche inférieure selon un rétablissement de la couche inférieure ;
l'arrêt et la réinitialisation d'une minuterie de réorganisation, si la minuterie de réorganisation est en cours d'exécution ;
la réalisation d'une décompression d'en-tête pour toutes les unités de données de service, SDU, PDCP stockées à l'aide d'une compression d'en-tête ethernet, EHC, configurée pour l'entité PDCP ; et
la distribution de toutes les SDU PDCP à en-tête décompressé à la couche supérieure dans l'ordre croissant de valeurs de comptage associées,
dans lequel une porteuse radio de données, DRB, comprenant l'entité PDCP est mappée sur une entité de commande de liaison radio, RLC, d'un mode sans accusé de réception, UM.

2. Procédé de la revendication 1, dans lequel la demande de rétablissement de PDCP est sur la base d'un message de commande de ressource radio, RRC, comprenant une indication d'information de commande de mobilité.

3. Procédé de la revendication 1, comprenant en outre :
si l'entité PDCP est associée à au moins une entité RLC configurée avec une distribution dans le désordre et qu'un indicateur indiquant une utilisation continue de l'EHC pour une liaison descendante n'est pas configuré, la réinitialisation de l'EHC pour la liaison descendante.

4. Procédé de la revendication 3, comprenant en outre :
la définition d'une variable de numéro suivant de séquence de réception PDCP et d'une variable de numéro d'hypertrame de réception sur 0 ; et
la définition d'une variable de dernier numéro de séquence de réception PDCP soumis sur un numéro de séquence PDCP maximum.

5. Procédé de la revendication 4, comprenant en outre :
l'application d'un algorithme de chiffrement et d'une clé fournis par la couche supérieure lors du rétablissement de PDCP.

6. Procédé de la revendication 1, dans lequel la décompression d'en-tête est réalisée pour toutes les SDU PDCP stockées en utilisant l'EHC configuré pour l'entité PDCP, après réalisation d'un déchiffrement.

7. Équipement utilisateur, UE, dans un système de communication sans fil, l'UE comprenant :
au moins un émetteur-récepteur ;
au moins un processeur couplé en communication à l'au moins un émetteur-récepteur ; et
au moins une mémoire, couplée en communication à l'au moins un processeur, stockant des instructions pouvant être exécutées par l'au moins un processeur individuellement ou dans une combinaison quelconque pour amener l'UE à :
recevoir, à partir d'une couche supérieure, une demande de rétablissement d'un protocole de convergence de données par paquets, PDCP, d'une entité PDCP, si une fonction de réorganisation est utilisée pour l'entité PDCP,
traiter une unité de données de protocole PDCP, PDU, reçue à partir d'une couche inférieure selon un rétablissement de la couche inférieure,
arrêter et réinitialiser une minuterie de réorganisation, si la minuterie de réorganisation est en cours d'exécution,
réaliser une décompression d'en-tête pour toutes les unités de données de service, SDU, PDCP stockées à l'aide d'une compression d'en-tête ethernet, EHC, configurée pour l'entité PDCP, et
distribuer toutes les SDU PDCP à en-tête décompressé à la couche supérieure dans l'ordre croissant de valeurs de comptage associées,
dans lequel une porteuse radio de données, DRB, comprenant l'entité PDCP est mappée sur une entité de commande de liaison radio, RLC, d'un mode sans accusé de réception, UM.

8. UE de la revendication 7, dans lequel la demande de rétablissement de PDCP est sur la base d'un message de commande de ressource radio, RRC, comprenant une indication d'information de commande de mobilité.

9. UE de la revendication 7, dans lequel l'au moins un processeur est en outre configuré pour :
si l'entité PDCP est associée à au moins une entité RLC configurée avec une distribution dans le désordre et qu'un indicateur indiquant une utilisation continue de l'EHC pour une liaison descendante n'est pas configuré, réinitialiser l'EHC pour la liaison descendante.

10. UE de la revendication 9, dans lequel l'au moins un processeur est en outre configuré pour :
définir une variable de numéro suivant de séquence de réception PDCP et une variable de numéro d'hypertrame de réception sur 0, et
définir une variable de dernier numéro de séquence de réception PDCP soumis sur un numéro de séquence PDCP maximum.

11. UE de la revendication 10, dans lequel l'au moins un processeur est en outre configuré pour :
appliquer un algorithme de chiffrement et d'une clé fournis par la couche supérieure lors du rétablissement de PDCP.
